# EUROPÄISCHE PATENTANMELDUNG

(11) **EP 4 286 264 A2**
(43) Veröffentlichungstag der Anmeldung: **06.12.2023**
(21) Anmeldenummer: 23170071.7
(22) Anmeldetag: 26.04.2023
(51) Int. Cl.: B62M 6/55, B62K 19/34

(54) **ANTRIEBSEINHEIT EINES MIT MUSKELKRAFT UND/ODER MOTORKRAFT BETREIBBAREN FAHRZEUGS**

(30) Priorität: 03.06.2022 DE 102022205714
(71) Anmelder: Robert Bosch GmbH, 70442 Stuttgart (DE)
(72) Erfinder: Schumacher, Christoph, 72144 Dusslingen (DE); Binder, Julian, 72827 Wannweil (DE); Braun, Sigmund, 72127 Kusterdingen (DE); Kimmich, Peter, 71144 Steinenbronn (DE); Schwenk, Daniel, 72280 Dornstetten (DE); Hundt, Harald, 73101 Aichelberg (DE); Holst, Stefan, 72760 Reutlingen (DE)

(57) **Zusammenfassung**

Die Erfindung betrifft eine Antriebseinheit (2) eines mit Muskelkraft und/oder Motorkraft betreibbaren Fahrzeugs (100), umfassend einen Motor (21) mit einer Motorachse (21a), eine Kurbelwelle (22) mit einer Kurbelachse (22a), ein Getriebe (23), das den Motor (21) und die Kurbelwelle (22) mechanisch miteinander gekoppelt, und ein Gehäuse (28), in dem der Motor (21) und das Getriebe (23) angeordnet sind, wobei das Getriebe (23) zumindest ein erstes Getrieberad (24), das um die Motorachse (21a) rotierbar ist, und ein zweites Getrieberad (25), das um die Kurbelachse (22a) rotierbar ist, aufweist, wobei das Gehäuse (28) einen ersten Befestigungsbereich (91) und einen zweiten Befestigungsbereich (92) aufweist, wobei der erste Befestigungsbereich (91) und der zweite Befestigungsbereich (92) eingerichtet sind zur Befestigung der Antriebseinheit (2) an einer Rahmenschnittstelle (3) des mit Muskelkraft und/oder Motorkraft betreibbaren Fahrzeugs (100), wobei in einer Schnittebene durch die Antriebseinheit (2) und orthogonal zur Kurbelachse (22a): eine Längsachse (29) definiert ist, welche die Kurbelachse (22a) und die Motorachse (21a) schneidet, und eine erste Linie (81) definiert ist, die orthogonal zur Längsachse (29) und tangential an einem Außenumfang (21c) des Motors (21) angeordnet ist, und wobei der erste Befestigungsbereich (91) einen ersten Mittelpunkt (91a) aufweist, der auf der ersten Linie (81) oder auf einer von der Kurbelachse (22a) abgewandten Seite der ersten Linie (81) angeordnet ist.

## Beschreibung

### Stand der Technik

Die vorliegende Erfindung betrifft eine Antriebseinheit eines mit Muskelkraft und/oder Motorkraft betreibbaren Fahrzeugs, eine Antriebsanordnung, und ein Fahrzeug.

Bekannt sind Fahrzeuge, wie Elektrofahrräder, die zwischen zwei Wänden einer Rahmenschnittstelle gehaltene Antriebseinheiten aufweisen. Die Antriebseinheit wird üblicherweise mit den beiden gegenüberliegenden Wänden verschraubt. Bei Elektrofahrrädern ergeben sich dabei im Hinblick auf Anzahl und Lage der Anschraubpunkte häufig entgegengesetzte Anforderungen hinsichtlich einerseits kompakter und leichtgewichtige Konstruktion, und andererseits hoher Stabilität und optimaler Kraftübertragung.

### Offenbarung der Erfindung

Die erfindungsgemäße Antriebseinheit mit den Merkmalen des Anspruchs 1 zeichnet sich demgegenüber dadurch aus, dass eine belastungstechnisch vorteilhafte Halterung einer Antriebseinheit bei gleichzeitig kompakter Konstruktion mit geringem Gewicht ermöglicht wird. Zusätzlich wird eine besonders einfache und kostengünstige Herstellung und Montage der Antriebseinheit ermöglicht. Dies wird erreicht durch eine Antriebseinheit eines mit Muskelkraft und/oder Motorkraft betreibbaren Fahrzeugs, insbesondere eines Elektrofahrrads, umfassend einen Motor, eine Kurbelwelle, ein Getriebe, und ein Gehäuse. Der Motor weist eine Motorachse auf. Die Kurbelwelle weist eine Kurbelachse auf. Das Getriebe koppelt den Motor und die Kurbelwelle mechanisch miteinander, insbesondere zur Drehmomentübertragung. Innerhalb des Gehäuses sind dabei der Motor und das Getriebe angeordnet. Das Getriebe weist dabei mindestens ein erstes Getrieberad, welches um die Motorachse rotierbar ist, und ein zweites Getrieberad, das um die Kurbelachse rotierbar ist, auf. Vorzugsweise kann das Getriebe zusätzlich mindestens ein drittes Getrieberad aufweisen, das zwischen erstem Getrieberad und zweitem Getrieberad angeordnet ist, insbesondere sodass das Getriebe ein mehrstufiges Getriebe bildet. Das Gehäuse weist einen ersten Befestigungsbereich und einen zweiten Befestigungsbereich auf. Die beiden Befestigungsbereiche sind eingerichtet zur Befestigung der Antriebseinheit an einer Rahmenschnittstelle des Fahrzeugs. Bevorzugt weist die Antriebseinheit ausschließlich den ersten Befestigungsbereich und den zweiten Befestigungsbereich zur Befestigung an einer Rahmenschnittstelle auf.

In einer Schnittebene, die die Antriebseinheit, insbesondere mittig, schneidet und die orthogonal zur Kurbelachse ist, ist eine Längsachse definiert, welche die Kurbelachse und die Motorachse schneidet. Zusätzlich ist in der Schnittebene eine erste Linie definiert, die orthogonal zur Längsachse ist, und die tangential an einem Außenumfang des Motors angeordnet ist. Insbesondere ist die erste Linie auf einer der Kurbelachse abgewandten Seite des Motors angeordnet. Der erste Befestigungsbereich weist dabei einen ersten Mittelpunkt auf, wobei der erste Mittelpunkt auf der ersten Linie oder auf einer von der Kurbelachse abgewandten Seite der ersten Linie angeordnet ist.

Mit anderen Worten ist die Antriebseinheit mittels der beiden Befestigungsbereiche an einer Rahmenschnittstelle eines Fahrzeugs befestigbar, wobei der motorseitige erste Befestigungsbereich entlang der Längsachse in einem Kurbelachsen-abgewandten Bereich der tangential am Motor angeordneten ersten Linie angeordnet ist.

Bevorzugt ist der Motor ein Elektromotor, welcher vorzugsweise einen Stator und einen relativ zum Stator um die Motorachse rotierbaren Rotor aufweist. Als Außenumfang des Motors wird insbesondere eine Außenabmessung des Stators angesehen, das heißt insbesondere eine maximale Abmessung des Elektromotors.

Vorzugsweise liegt der erste Befestigungsbereich in Fahrtrichtung des Fahrzeugs, an dem die Antriebseinheit montierbar ist, vor dem zweiten Befestigungsbereich.

Die Antriebseinheit bietet dabei den Vorteil einer optimalen geometrischen Auslegung, die eine vorteilhafte mechanische Befestigung bei gleichzeitiger Kompaktheit und Möglichkeit der Gewichtseinsparung erlaubt. Durch die Anordnung des ersten Befestigungsbereichs auf der ersten Linie oder auf der der Kurbelachse abgewandten Seite der ersten Linie ergibt sich ein großer Abstand zwischen erstem Befestigungsbereich und Kurbelachse. Somit liegt ein großer Hebelarm zwischen diesen beiden Punkten vor. Dadurch können über die Kurbelwelle in die Antriebseinheit eingeleitete Kräfte, insbesondere aufgrund einer Pedalbetätigung eines Fahrers des Fahrzeugs, optimal an einer Rahmenschnittstelle bzw. von der Rahmenschnittstelle aufgenommen werden. Beispielsweise kann somit ein Befestigungsmittel am ersten Befestigungsbereich und/oder die Rahmenschnittstelle am Befestigungsbereich weniger robust dimensioniert werden, wodurch Bauraum und Gewicht eingespart werden kann.

Die Unteransprüche haben bevorzugte Weiterbildungen der Erfindung zum Inhalt.

Bevorzugt trennt die Längsachse einen Fahrzeug-zugewandten Bereich und einen Fahrzeug-abgewandten Bereich voneinander. Der erste Mittelpunkt liegt dabei auf der Längsachse oder innerhalb des Fahrzeug-zugewandten Bereichs. Insbesondere entspricht der Fahrzeug-zugewandte Bereich somit bei einer vorgesehenen Montage der Antriebseinheit im Bereich des Tretlagers des Fahrzeugs einem vertikal oberen Bereich der Antriebseinheit. Damit kann eine vorteilhafte Lage des ersten Befestigungsbereichs bereitgestellt werden, um eine besonders wenig Bauraum und Material beanspruchende Rahmenschnittstelle des Fahrzeugs zu ermöglichen.

Vorzugsweise liegt der erste Mittelpunkt innerhalb eines ersten Befestigung-Sektors. Der erste Befestigung-Sektor ist dabei durch zwei Geraden, welche jeweils die Motorachse schneiden, begrenzt. Ein erster Winkel zwischen einer ersten der beiden Geraden und der Längsachse beträgt mindestens 5°, vorzugsweise mindestens 10°, besonders bevorzugt mindestens 20°. Ein zweiter Winkel zwischen einer zweiten der beiden Geraden beträgt maximal 70°, bevorzugt maximal 60°, besonders bevorzugt maximal 50°. Damit kann ein optimaler Kompromiss zwischen stabiler mechanischer Abstützung der Antriebseinheit an der Rahmenschnittstelle und zudem Kompaktheit, insbesondere mit geringer vertikaler Abmessung, der Antriebseinheit bereitgestellt werden.

Besonders bevorzugt beträgt ein erster Abstand des ersten Mittelpunkts von der Motorachse mindestens 130 %, bevorzugt mindestens 140 %, besonders bevorzugt maximal 180 %, eines maximalen Radius des Motors. Insbesondere ist der maximale Radius des Motors durch einen Außenumfang eines Stators des Motors definiert. Somit kann eine hohe Stabilität bei optimaler Ausnutzung der Platzverhältnisse bereitgestellt werden.

Weiter bevorzugt beträgt ein zweiter Abstand des ersten Mittelpunkts von der Kurbelachse mindestens 150 %, bevorzugt mindestens 180 %, besonders bevorzugt maximal 250 %, eines Längs-Abstands, wobei der Längs-Abstand als Abstand von Motorachse und Kurbelachse voneinander definiert ist. Dadurch wird ein großer Hebelarm zwischen Kurbelachse und erstem Befestigungsbereich bereitgestellt, um eine besonders stabile Anordnung zu ermöglichen.

Bevorzugt beträgt ein dritter Abstand des ersten Mittelpunkts von einem zweiten Mittelpunkt des zweiten Befestigungsbereichs mindestens 120 %, bevorzugt mindestens 130 %, bevorzugt maximal 150 %, des zweiten Abstands des ersten Mittelpunkts von der Kurbelachse. Somit kann durch einen großen Abstand der beiden Befestigungsbereiche eine besonders stabile Konstruktion bezüglich der von der Antriebseinheit in die Rahmenschnittstelle einzuleitenden Kräfte ermöglicht werden. Zugleich kann eine möglichst kompakte Konstruktion der Antriebseinheit bereitgestellt werden.

Weiter bevorzugt beträgt ein vierter Abstand des zweiten Mittelpunkts von der Kurbelachse maximal 180 %, bevorzugt maximal 140 %, eines maximalen Radius des zweiten Getrieberads. Somit kann eine optimale Abstützung mechanischer Kräfte bei kompakter Geometrie der Antriebseinheit bereitgestellt werden.

Besonders bevorzugt trennt die Längsachse einen Fahrzeug-zugewandten Bereich und einen Fahrzeug-abgewandten Bereich voneinander, wobei der zweite Mittelpunkt des zweiten Befestigungsbereichs auf der Längsachse oder innerhalb des Fahrzeug-zugewandten Bereichs angeordnet ist. Somit sind beide Befestigungsbereiche innerhalb des Fahrzeug-zugewandten Bereichs, das heißt vertikal oberhalb von Motorachse und Kurbelachse, angeordnet. Somit kann neben einer kompakten Antriebseinheit auch eine besonders platz- und materialsparende Rahmenschnittstelle bereitgestellt werden.

Vorzugsweise ist ferner eine zweite Linie definiert, welche in der Schnittebene, die die Antriebseinheit schneidet und orthogonal zur Kurbelachse ist, liegt. Die zweite Linie ist dabei orthogonal zur Längsachse und tangential an einem Außenumfang des zweiten Getrieberads angeordnet. Insbesondere ist die zweite Linie auf einer dem Motor abgewandten Seite des zweiten Getrieberads angeordnet. Der zweite Mittelpunkt des zweiten Befestigungsbereichs ist dabei auf einer der Motorachse zugewandten Seite der zweiten Linie angeordnet. Dadurch kann eine besonders einfache und materialsparende Rahmenschnittstelle am Fahrzeug vorgesehen werden, da beispielsweise die beiden Befestigungsbereiche im Wesentlichen auf einer vertikalen Höhe angeordnet sein können.

Bevorzugt ist ferner eine dritte Linie definiert, welche in der zur Kurbelachse orthogonalen Schnittebene durch die Antriebseinheit liegt. Die dritte Linie ist dabei orthogonal zur Längsachse und schneidet die Kurbelachse. Der zweite Mittelpunkt des zweiten Befestigungsbereichs liegt dabei zwischen der zweiten Linie und der dritten Linie. Dadurch kann ein großer Abstand zwischen ersten Befestigungsbereich und zweitem Befestigungsbereich bereitgestellt werden, um eine besonders stabile breite mechanische Abstützung der Befestigung ermöglichen zu können.

Vorzugsweise ist eine dritte Gerade definiert, welche die Kurbelachse schneidet, und auf welcher der zweite Mittelpunkt liegt. Die dritte Gerade ist derart angeordnet, dass ein dritter Winkel zwischen der dritten Gerade und der Längsachse mindestens 40°, bevorzugt mindestens 50°, besonders bevorzugt maximal 80°, beträgt. Somit befindet sich der zweite Befestigungsbereich innerhalb eines Bereichs, welcher derart angeordnet ist, um einen optimalen Kompromiss aus breiter Abstützung und Kompaktheit bereitzustellen.

Weiter bevorzugt trennt die Längsachse einen Fahrzeug-zugewandten Bereich und einen Fahrzeug-abgewandten Bereich voneinander, wobei der zweite Mittelpunkt innerhalb des Fahrzeug-abgewandten Bereichs angeordnet ist. In diesem Fall befinden sich somit erster Befestigungsbereich und zweiter Befestigungsbereich auf gegenüberliegenden Seiten der Längsachse. Damit kann ein großer Abstand zwischen den beiden Befestigungsbereichen bereitgestellt werden, was eine besonders stabile Befestigung der Antriebseinheit erlaubt.

Bevorzugt ist eine zweite Linie definiert, die in der zur Kurbelachse orthogonalen Schnittebene durch die Antriebseinheit liegt, wobei die zweite Linie orthogonal zur Längsachse und tangential an einem Außenumfang des zweiten Getrieberads angeordnet ist. Insbesondere ist die zweite Linie auf einer dem Motor abgewandten Seite des zweiten Getrieberads angeordnet. Der zweite Mittelpunkt des zweiten Befestigungsbereichs ist dabei auf der zweiten Linie oder auf einer der Motorachse abgewandten Seite der zweiten Linie angeordnet. Insbesondere befinden sich der erste Befestigungsbereich und der zweite Befestigungsbereich somit in maximaler Entfernung relativ zueinander am Gehäuse der Antriebseinheit. Dadurch kann der zur Verfügung stehende Bauraum optimal ausgenutzt werden, um eine besonders breite und damit stabile mechanische Abstützung der Antriebseinheit an den beiden Befestigungsbereichen zu ermöglichen.

Vorzugsweise ist ferner eine Befestigungsachse definiert, auf welcher der erste Mittelpunkt liegt, und welche die Kurbelachse schneidet. Der zweite Mittelpunkt und die Motorachse sind dabei auf derselben Seite der Befestigungsachse angeordnet. Insbesondere sind der zweite Mittelpunkt und die Motorachse auf der Fahrzeug-abgewandten Seite der Befestigungsachse angeordnet. Damit können besonders vorteilhafte Hebelverhältnisse hinsichtlich der im Betrieb auftretenden mechanischen Kräfte bereitgestellt werden.

Bevorzugt beträgt ein vierter Winkel zwischen der Befestigungsachse und einer Verbindungslinie, die Kurbelachse und zweiten Mittelpunkt miteinander verbindet, maximal 30°, bevorzugt mindestens 10°. Somit wird eine Anordnung des zweiten Befestigungsbereichs weit oben bei möglichst kompakten Abmessungen der Antriebseinheit bereitgestellt.

Weiterhin betrifft die Erfindung eine Antriebsanordnung eines mit Muskelkraft und/oder Motorkraft betreibbaren Fahrzeugs, insbesondere eines Elektrofahrrads, umfassend die oben beschriebene Antriebseinheit, und eine Rahmenschnittstelle. Die Antriebseinheit ist dabei zumindest teilweise zwischen einer ersten Wand und einer zweiten Wand der Rahmenschnittstelle angeordnet. Das Gehäuse der Antriebseinheit ist mittels jedem der beiden Befestigungsbereiche der Antriebseinheit an jeder der beiden Wände befestigt. Das heißt, der erste Befestigungsbereich ist mit jeder der beiden Wände verbunden, insbesondere mittels einer Verschraubung mit einer der beiden Wände, und auch der zweite Befestigungsbereich ist mit jeder der beiden Wände verbunden, insbesondere mittels einer Verschraubung mit einer der beiden Wände. Bevorzugt sind Rahmenschnittstelle und Antriebseinheit ausschließlich mittels der beiden Befestigungsbereiche mechanisch miteinander verbunden. Die Antriebsanordnung zeichnet sich somit durch einen besonders einfachen und kostengünstigen Aufbau aus, der bei leichtgewichtiger Konstruktion eine besonders stabile und damit belastungstechnisch vorteilhafte Befestigung der Antriebseinheit ermöglicht.

Bevorzugt umfasst die Rahmenschnittstelle einen Gelenkbereich, welcher eingerichtet ist zur Aufnahme eines Gelenkpunktes eines Hinterbaus des Fahrzeugs. Insbesondere kann am Gelenkbereich ein Hauptdrehpunkt für einen Hinterbau eines vollgefederten Elektrofahrrads angeordnet sein. Der Gelenkbereich ist dabei im Fahrzeug-zugewandten Bereich bezogen auf die Anordnung der Befestigungsbereiche an der Antriebseinheit angeordnet. Weiter bevorzugt ist der Gelenkbereich auf der zweiten Linie oder auf einer der Motorachse abgewandten Seite der zweiten Linie angeordnet. Alternativ kann der Gelenkbereich, beispielsweise bei alternativer Einbaulage der Antriebseinheit, auch auf einer der Motorachse zugewandten Seite der zweiten Linie angeordnet sein. Besonders vorteilhaft ist diese Anordnung des Gelenkbereichs, wenn der zweite Befestigungsbereich im Fahrzeug-abgewandten Bereich angeordnet ist. Damit kann der Gelenkbereich besonders nahe an der Kurbelachse positioniert werden, wodurch eine vorteilhafte Hinterbau-Kinematik des Fahrzeugs bereitgestellt werden kann. Beispielsweise kann eine Kettenstrebenlänge dadurch möglichst kurz gehalten werden.

Besonders bevorzugt ist eine maximale Breite der Rahmenschnittstelle zwischen der ersten Wand und der zweiten Wand an einem ersten Anbindungsbereich größer als an einem zweiten Anbindungsbereich. Insbesondere erfolgt am ersten Anbindungsbereich die Befestigung mittels des ersten Befestigungsbereichs, wobei am zweiten Anbindungsbereich die Befestigung mittels des zweiten Befestigungsbereichs erfolgt. Bevorzugt beträgt die maximale Breite am zweiten Anbindungsbereich maximal 90 %, bevorzugt maximal 80 %, besonders bevorzugt maximal 70 %, der maximalen Breite am ersten Anbindungsbereich. Dadurch kann eine besonders vorteilhafte mechanische Anbindung der Antriebsanordnung an vollgefederten Elektrofahrrädern erfolgen. Bevorzugt ist der schmälere zweite Anbindungsbereich dabei in Fahrtrichtung hinten angeordnet. Dadurch steht am zweiten Anbindungsbereich eine vergrößerte Designfreiheit für eine Hinterbaukinematik zur Verfügung. Beispielsweise können Kettenstreben und/oder ein Drehpunkt für ein Hauptlager, das den Hinterbau schwenkbar mit dem Rest des Fahrradrahmens verbindet, bei mehr Platz optimal positioniert werden. Ferner erlaubt ein breiter erster Anbindungsbereich, vorzugsweise in Fahrtrichtung vorne, eine besonders stabile Konstruktion. Beispielsweise kann dies besonders vorteilhaft mit einer Montage einer Batterie in einem Unterrohr des Elektrofahrrads zusammenwirken.

Vorzugsweise umfasst die Antriebsanordnung jeweils zwei Schrauben pro Befestigungsbereich der Antriebseinheit. Das Gehäuse der Antriebseinheit ist dabei mittels der, insbesondere insgesamt vier, Schrauben mit den beiden Wänden der Rahmenschnittstelle verschraubt. Beispielsweise können jeweils zwei Schrauben von gegenüberliegenden Seiten eingeschraubt werden zur Befestigung der Antriebseinheit an der Rahmenschnittstelle.

Bevorzugt weist die Antriebseinheit pro Befestigungsbereich jeweils eine Durchgangsbohrung auf, insbesondere welche die Antriebseinheit vollständig durchdringt. Zusätzlich weist die Antriebseinheit einen Durchgangsbolzen pro Befestigungsbereich auf, wobei jeder Durchgangsbolzen durch die entsprechende Durchgangsbohrung durchgesteckt ist, und die Antriebseinheit an jeder der beiden Wände befestigt. Damit kann eine besonders einfache und zugleich robuste Befestigung der Antriebseinheit an der Rahmenschnittstelle bereitgestellt werden.

Besonders bevorzugt umfasst die Antriebsanordnung jeweils zwei Hülsen pro Durchgangsbohrung. Die beiden Hülsen sind dabei beidseitig in die entsprechende Durchgangsbohrung eingesteckt. Der jeweilige Durchgangsbolzen ist durch die beiden entsprechenden Hülsen durchgesteckt. Durch die Hülsen kann ein gewünschter Belastungszustand der Antriebseinheit optimal eingestellt werden. Beispielsweise kann durch entsprechende Auslegung der Hülsen ein neutraler Einbauzustand der Antriebseinheit bereitgestellt werden, in welchem keine axialen Kräfte, insbesondere bezogen auf eine Längsachse des Durchgangsbolzens, auf die Antriebseinheit wirken. Alternativ können die Hülsen beispielsweise so ausgelegt werden, dass durch die Verspannung mittels des Durchgangsbolzens eine leichte oder starke Druckbeanspruchung der Antriebseinheit in axialer Richtung wirkt, was sich vorteilhaft auf eine Dichtigkeit der Antriebseinheit gegenüber einem Fluideintritt auswirken kann.

Vorzugsweise berühren sich die beiden Hülsen innerhalb der Durchgangsbohrung. Mittels des Durchgangsbolzens sind die beiden Hülsen dabei gegeneinander verspannt. Dadurch, dass die Hülsen sich in der Durchgangsbohrung berühren, können die axialen Kräfte, welche bedingt durch die Befestigung an der Rahmenschnittstelle auftreten können, durch die Hülsen aufgenommen werden, sodass die mechanische Belastung der Antriebseinheit reduziert wird.

Bevorzugt weist jede Hülse einen Schaft und einen Flansch auf. Der Schaft ist vorzugsweise hohlzylindrisch ausgebildet, und bevorzugt ist der Flansch an einem axialen Ende des Schafts angeordnet und weist einen größeren Außendurchmesser als der Schaft auf. Der Schaft ist dabei zumindest teilweise innerhalb der Durchgangsbohrung angeordnet, und der Flansch ist außerhalb der Durchgangsbohrung angeordnet. Insbesondere ist der Flansch an einer die Durchgangsbohrung umgebende Stirnseite der Antriebseinheit anlegbar ausgebildet und kann eine Einstecktiefe des Schafts der Hülse genau definieren. Dadurch kann die gewünschte mechanische Belastung besonders einfach und genau eingestellt werden.

Besonders vorteilhaft ist es, wenn der Flansch der Hülsen mit unterschiedlichen Dicken, insbesondere bezüglich der Axialrichtung der Hülse, bereitstellbar ist. Beispielsweise kann der Flansch einer Hülse einer ersten Ausführungsform eine erste Dicke aufweisen, wobei der Flansch einer Hülse einer zweiten Ausführungsform eine zweite Dicke aufweisen kann, die mindestens das 1,5-fache, bevorzugt mindestens das Doppelte, insbesondere mindestens das dreifache, der ersten Dicke beträgt. Dadurch ergibt sich der Vorteil, dass die Breite der Antriebsanordnung, vorzugsweise gemessen entlang einer Axialrichtung der Durchgangsbohrung, auf besonders einfache und kostengünstige Weise variabel ist. Beispielsweise kann die Breite der Antriebsanordnung dabei durch Variation der Dicke der Flansche der Hülsen an unterschiedlich breite Rahmenschnittstelle angepasst werden, sodass die Antriebsanordnung besonders flexibel und kostengünstig eingesetzt werden kann.

Besonders bevorzugt weist jede Hülse ein Dämpfungselement auf, welches an einer der Antriebseinheit zugewandten Seite des Flansches angeordnet ist. Das Dämpfungselement ist dabei aus einem schwingungsdämpfenden Material gebildet. Bevorzugt ist das dem Dämpfungselement aus einem Elastomer gebildet. Das Dämpfungselement bildet dabei eine gewisse Dämpfungswirkung durch eine elastische Verformbarkeit zwischen Flansch und Antriebseinheit. Dadurch kann die Antriebsanordnung auf einfache und kostengünstige Weise so ausgelegt werden, dass die Antriebseinheit beispielsweise spielfrei in Axialrichtung der Durchgangsbohrung gehalten wird, indem das Dämpfungselement verformt bzw. auf Druck teilweise verpresst wird. Zusätzlich kann das Dämpfungselement eine Übertragung von Schwingungen und Vibrationen zwischen Antriebseinheit und Rahmenschnittstelle reduzieren. Außerdem bewirkt das Dämpfungselement vorteilhafterweise eine Dichtwirkung zwischen Hülse und Antriebseinheit.

Vorzugsweise umgibt das Dämpfungselement zusätzlich den Schaft zumindest teilweise, bevorzugt vollständig, in Umfangsrichtung. Insbesondere ist das Dämpfungselement somit als Umspritzung des Schafts und der den Schaft zugewandten Seite des Flansches ausgebildet. Das Dämpfungselement bietet somit den Vorteil einer schwingungsmechanisch optimierten Befestigung der Antriebseinheit an der Rahmenschnittstelle. Dies wirkt sich besonders vorteilhaft auf eine Haltbarkeit von Verschraubungen aus, da insbesondere durch die schwingungsdämpfende Wirkung eine Übertragung von Schwingungen und Vibrationen sowie wechselnde dynamische Lasten aufgrund der federnden und dämpfenden Eigenschaften des Dämpfungselements verringert werden. Somit wird auch eine wechselnde mechanische Belastung der Schraubverbindung verringert oder verhindert, wodurch eine hohe Haltbarkeit bereitgestellt werden kann. Zudem kann dadurch beispielsweise ein Auftreten ungewollter Geräusche reduziert werden. Ferner erlaubt das Dämpfungselement einen gewissen Toleranzausgleich. Zudem bietet sich der Vorteil eines zusätzlichen Schutzes vor Korrosion, insbesondere galvanischer Korrosion, beispielsweise wenn die Antriebseinheit ein Gehäuse aus Magnesium aufweist, wobei die Hülsen beispielsweise aus Aluminium oder Stahl gebildet sind. Zudem kann eine axiale und radiale Dichtwirkung an der Antriebseinheit bereitgestellt werden.

Weiter bevorzugt sind die beiden Hülsen so ausgelegt, dass diese in einem vollständig in die Durchgangsbohrung eingeschobenen Zustand und gleichzeitig unverspanntem Zustand innerhalb der Durchgangsbohrung in einem vordefinierten Axialabstand zueinander angeordnet sind. Mit anderen Worten ist eine Summe der axialen Längen der Hülsen, wenn diese unverspannt in die Durchgangsbohrung eingesteckt sind, kleiner als eine gesamte axiale Länge der Durchgangsbohrung.

Vorzugsweise ist der vordefinierte Axialabstand so ausgelegt, dass in dem verspannten Zustand der beiden Hülsen, welcher durch den Durchgangsbolzen bewirkt ist, der Axialabstand aufgrund einer elastischen Verformung des Dämpfungselements kompensiert ist. Das heißt, dass die Hülsen sich innerhalb der Durchgangsbohrung berühren. Mit anderen Worten sind die beiden Hülsen derart ausgelegt, dass in dem verspannten Zustand, wenn die beiden Hülsen sich innerhalb der Durchgangsbohrung berühren, das jeweilige Dämpfungselement der beiden Hülsen elastisch verformt ist, insbesondere zwischen Flansch und Antriebseinheit verpresst ist. Dadurch kann besonders einfach ein vorbestimmter Belastungszustand der Antriebseinheit mit geringer vorbestimmter Druckbeanspruchung eingestellt werden. Zudem wird zuverlässig eine Abdichtung mittels des verformten bzw. verpressten Dämpfungselements sichergestellt. Dadurch, dass die Hülsen sich berühren, wird weiterhin eine Aufnahme der axialen mechanischen Kräfte über die Hülsen sichergestellt, sodass beispielsweise eine Verschraubung des Durchgangsbolzens mit hohem Drehmoment ermöglicht werden kann, ohne dass eine zu hohe mechanische Belastung der Antriebseinheit auftritt. Gleichzeitig kann hierdurch eine besonders stabile Verschraubung erfolgen.

Vorzugsweise weist der Flansch von zumindest einer der beiden Hülsen an einer der entsprechenden Wand zugewandten Seite eine Vielzahl an vorstehenden Formschlusselementen auf. Die Formschlusselemente sind so ausgebildet, um sich durch die Verschraubung der Hülse mit der entsprechenden Wand in diese Wand einzudrücken. Insbesondere bewirken die Formschlusselemente durch das Eindrücken in die Wand eine plastische Verformung der Wand, insbesondere derart, dass die Formschlusselemente und der plastisch verformte Bereich der Wand einen Formschluss in einer zur Schraubenachse senkrechten Ebene bilden. Das heißt, die Hülse weist an der Oberfläche des Flansches die vorstehenden Formschlusselemente auf, die sich beim gegeneinander Verschrauben von Hülse und Wand teilweise in die Wand eingraben, insbesondere um in der Ebene der Wandoberfläche einen Mikro-Formschluss zu erzeugen. Dadurch kann eine besonders feste Verbindung der Antriebseinheit mit der Rahmenschnittstelle bereitgestellt werden, da ein Rutschen zwischen Hülse und Wand auf einfache Weise zuverlässig verhindert werden kann.

Bevorzugt weist jedes Formschlusselement eine von einer Oberfläche des Flansches der Hülse vorstehende Pyramide auf. Alternativ weist jedes Formschlusselement beispielsweise einen von einer Oberfläche des Flansches der Hülse vorstehenden Kegel auf. Mit anderen Worten sind eine Vielzahl an von der Oberfläche des Flansches vorstehenden Pyramidenspitzen als Formschlusselemente vorgesehen. Besonders bevorzugt sind die Pyramiden dabei spitz ausgebildet, und weisen insbesondere einen Öffnungswinkel von weniger als 60°, bevorzugt weniger als 45°, auf, sodass diese besonders leicht in die Wand eindringen können. Eine derartige Ausgestaltung mit spitzen Pyramiden als Formschlusselementen ist besonders vorteilhaft bei der Verschraubung der Antriebseinheit an Carbonrahmen, das heißt, an Rahmenschnittstellen, welche zumindest teilweise aus einem faserverstärkten, bevorzugt kohlefaserverstärktem, Kunststoff bestehen. Hierbei ergibt sich der Vorteil, dass die spitzen Pyramiden sich in die Netzstruktur des Carbons einprägen können, ohne diese zu schädigen. Insbesondere werden die Fasern beim Eindringen der Pyramiden nicht unterbrochen, sondern können ausweichen und sich um die jeweilige Pyramide herumlegen.

Weiter bevorzugt weist jedes Formschlusselement eine an die Pyramide angrenzende, beispielsweise die Pyramide umgebende, Vertiefung in der Oberfläche des Flansches auf. Vorzugsweise ist die Vertiefung als ringförmige Nut ausgebildet. Besonders bevorzugt ist eine einzelne Vertiefung in der Oberfläche des Flansches ausgebildet sein, an deren radialer Innenseite und/oder Außenseite die Pyramiden angeordnet sind. Alternativ kann pro Pyramide eine separate Vertiefung ausgebildet sein, wobei die die Vertiefung insbesondere unmittelbar an die Pyramide angrenzend angeordnet ist. Durch die Vertiefung kann beispielsweise durch das Eindringen der Pyramide in die Wand verdrängtes Material der Wand aufgenommen werden, um eine zuverlässige und definierte Anlage der Oberfläche des Flansches an der Wand zu ermöglichen.

Bevorzugt weist der Flansch von zumindest einer der beiden Hülsen an einem radial äußeren Ende eine Verjüngung auf. Vorzugsweise ist der Flansch scheibenförmig ausgebildet. Die Verjüngung ist dabei an der dem Schaft zugewandten Seite des Flansches angeordnet. Als Verjüngung wird insbesondere eine Reduktion der Dicke des Flansches, insbesondere in axialer Richtung der Hülse angesehen. Insbesondere entspricht die Verjüngung einer Differenz der maximalen Dicke und der minimalen Dicke des Flansches, wobei diese Differenz bevorzugt mindestens 50 %, vorzugsweise maximal 150 %, einer Wandstärke des Schafts der Hülse entspricht. Die Verjüngung des Flansches wird dabei durch das Dämpfungselement kompensiert. Mit anderen Worten ist eine Dicke des Dämpfungselements im Bereich der Verjüngung größer als am restlichen Bereich des Flansches. Vorzugsweise ist eine Gesamtdicke der Dämpfungshülse in axialer Richtung im Bereich des Flansches konstant. Alternativ bevorzugt kann das Dämpfungselement an einem radial äußeren Ende auf der dem Schaft zugewandten Seite eine Aufdickung aufweisen. Durch die Verjüngung des Flansches und das in diesem Bereich dickere Dämpfungselement kann in diesem Bereich eine weichere Zone der Dämpfungshülse bereitgestellt werden, welche eine besonders gute Dichtwirkung zwischen Dämpfungshülse und Antriebseinheit ermöglicht.

Weiter bevorzugt weist die Antriebseinheit zumindest eine vorstehende Ringrippe auf, welche konzentrisch zu einer der beiden Öffnungen angeordnet ist. Vorzugsweise weist die Ringrippe einen konischen oder trapezförmigen Querschnitt auf. Besonders bevorzugt sind die vorstehende Ringrippe und die Verjüngung des Flansches der Hülse auf demselben Radius bezüglich einer Öffnungsachse der Öffnung der Antriebseinheit angeordnet. Mit anderen Worten sind die vorstehende Ringrippe und die Verjüngung des Flansches der Hülse bezogen auf die radiale Richtung der Öffnung der Antriebseinheit auf derselben Höhe angeordnet. Die vorstehende Ringrippe kann somit optimal in den dickeren Bereich des Dämpfungselements eintauchen bei der Montage der Antriebsanordnung, wodurch eine besonders gute Dichtwirkung zwischen Dämpfungshülse und Antriebseinheit bereitgestellt werden kann.

Bevorzugt ist der Durchgangsbolzen an der zweiten Wand befestigt. Dabei verspannt der Durchgangsbolzen die beiden Hülsen und die zweite Wand gegeneinander. Insbesondere spannt der Durchgangsbolzen die beiden Hülsen zwischen einem Bolzenkopf und der zweiten Wand ein. Der Durchgangsbolzen ist dabei an der ersten Wand axial beweglich gehalten. Insbesondere ist der Durchgangsbolzen an der ersten Wand in radialer Richtung, insbesondere im Wesentlichen, unbeweglich gehalten, beispielsweise indem dieser zumindest teilweise innerhalb einer Durchgangsöffnung der ersten Wand angeordnet ist. Dadurch kann auf besonders einfache Weise ein Toleranzausgleich zwischen der Rahmenschnittstelle mit den beiden Wänden und der Antriebseinheit erfolgen, da die axial bewegliche Halterung des Durchgangsbolzens an der ersten Wand als Loslager wirkt, während die Befestigung an der zweiten Wand als Festlager wirkt.

Weiter bevorzugt umfasst die Antriebsanordnung ferner ein Toleranzausgleichselement. Die erste Wand weist dabei zudem eine erste Wandöffnung auf. Das Toleranzausgleichselement ist hülsenförmig ausgebildet und innerhalb der ersten Wandöffnung angeordnet. Der Durchgangsbolzen weist dabei einen Bolzenkopf auf, der innerhalb des Toleranzausgleichselements angeordnet ist. Insbesondere ist das Toleranzausgleichselement vorgesehen, um in radialer Richtung der Wandöffnung eine spielfreie Anordnung zwischen Bolzenkopf und erster Wand zu ermöglichen. Alternativ bevorzugt kann ein Bolzenschaft des Durchgangsbolzens innerhalb des Toleranzausgleichselements angeordnet sein, wobei in diesem Fall vorzugsweise der Durchgangsbolzen zusammen mit dem Toleranzausgleichselement axial relativ zur ersten Wand beweglich ist. Durch die Bereitstellung eines Toleranzausgleichselements als zusätzliches Bauteil kann der Toleranzausgleich auf besonders einfache Weise und präzise an die jeweilige Toleranzsituation angepasst durchgeführt werden.

Besonders bevorzugt weist das Toleranzausgleichselement eine Gleitlagerbuchse und eine Dämpfungshülle auf, wobei die Dämpfungshülle die Gleitlagerbuchse umgibt. Beispielsweise kann die Dämpfungshülle die Gleitlagerbuchse in Umfangsrichtung vollständig umgeben. Alternativ bevorzugt kann die Dämpfungshülle eine oder mehrere Aussparungen aufweisen. Vorzugsweise ist die Gleitlagerbuchse somit radial innen angeordnet. Dadurch wird ein reibungsarmer Gleitkontakt zwischen Bolzenkopf und Toleranzausgleichselement bereitgestellt, wodurch besonders zuverlässig eine unbeabsichtigte axiale Verspannung zwischen Durchgangsbolzen und erster Wand vermieden werden kann. Die Dämpfungshülle kann dabei einerseits eine Schwingungsübertragung zwischen erster Wand und Bolzenkopf verhindern oder verringern, und andererseits eine zuverlässige Befestigung des Toleranzausgleichselements in der Wandöffnung sicherstellen. Bevorzugt ist die Dämpfungshülle aus einem Elastomer gebildet.

Bevorzugt sind die Gleitlagerbuchse und der Bolzenkopf so ausgelegt, dass der Bolzenkopf die Gleitlagerbuchse in radialer Richtung aufweitet, wenn der Bolzenkopf innerhalb des Toleranzausgleichselements angeordnet ist, insbesondere in vollständig verspanntem Zustand. Beispielsweise kann dies mittels einer entsprechenden Passung zwischen Bolzenkopf und Gleitlagerbuchse erreicht werden. Vorzugsweise ist die Gleitlagerbuchse hierbei in Richtung zur Antriebseinheit hin an dessen innerem Umfang verjüngt ausgebildet, wobei der Bolzenkopf einen größeren Durchmesser aufweist. Dadurch wird erreicht, dass das Toleranzausgleichselement durch den Bolzenkopf radial in die Wandöffnung der ersten Wand eingepresst wird, wodurch eine besonders zuverlässige feste Halterung ermöglicht wird. Zudem kann dadurch eine radiale Toleranz auf Null reduziert werden.

Vorzugsweise ist die Gleitlagerbuchse geschlitzt ausgebildet. Dadurch kann die radiale Aufweitung besonders einfach und gezielt herbeigeführt werden. Zudem kann dadurch ein Einpressen des Toleranzausgleichselements in die Wandöffnung erleichtert werden.

Bevorzugt ist der Schlitz der Gleitlagerbuchse schräg bezüglich einer Axialrichtung der Gleitlagerbuchse, insbesondere bei Betrachtung des Schlitzes aus radialer Richtung, angeordnet. Dadurch kann eine optimale gleichmäßige mechanische Abstützung um den gesamten Umfang und über die gesamte axiale Länge der Gleitlagerbuchse bereitgestellt werden.

Besonders bevorzugt weist die Dämpfungshülle mindestens eine Dichtlippe an einer radialen Außenseite auf. Die mindestens eine Dichtlippe ist vorzugsweise an einem axialen Ende der Dämpfungshülle angeordnet. Bevorzugt sind an beiden axialen Enden jeweils eine Dichtlippe angeordnet. Die mindestens eine Dichtlippe ist dabei so ausgebildet, dass ein axialer Formschluss zwischen Dämpfungshülle und erster Wand vorliegt, wenn das Toleranzausgleichselement innerhalb der ersten Wandöffnung angeordnet ist. Mit anderen Worten kann das Toleranzausgleichselement mittels der Dichtlippe in die erste Wandöffnung eingeclipst werden. Dadurch kann eine besonders einfache und zuverlässige Halterung des Toleranzausgleichselements erreicht werden. Zudem wird eine besonders zuverlässige Dichtwirkung an der ersten Wandöffnung bereitgestellt.

Besonders bevorzugt ist die Dämpfungshülle so ausgebildet, dass die mindestens eine Dichtlippe durch den Bolzenkopf nach radial außen gedrängt wird, wenn sich der Bolzenkopf des Durchgangsbolzens innerhalb des Toleranzausgleichselements befindet. Bevorzugt steht hierbei eine weitere Dichtlippe an der radial inneren Seite des Toleranzausgleichselements über, welche durch den Bolzenkopf nach radial außen gedrückt wird um somit auch die radial äußere Dichtlippe nach außen zu drängen. Vorzugsweise sind diese beiden Dichtlippen an der der Antriebseinheit zugewandten Seite des Toleranzausgleichselements angeordnet. Dadurch wird sichergestellt, dass sich die Dichtlippe immer in Richtung der Antriebseinheit und nach radial außen aufstellt. Beispielsweise wird dadurch zudem verhindert, dass ein Teil der Dichtlippe durch Reibkräfte nach innen in Richtung Gleitlagerbuchse wandert.

Bevorzugt weist die Gleitlagerbuchse an zumindest einem axialen Ende, bevorzugt an beiden axialen Enden, eine radial nach außen vorstehende Rastnase auf. Insbesondere steht die Rastnase von einem zylindrischen Grundkörper der Gleitlagerbuchse radial nach außen. Durch die Rastnase kann eine zuverlässige Befestigung des Toleranzausgleichselements in der Wandöffnung der ersten Wand ermöglicht werden, insbesondere durch einen Formschluss zwischen Rastnase der Gleitlagerbuchse und erster Wand. Vorzugsweise kann die Gleitlagerbuchse durch den Schlitz bei der Montage gestaucht werden, um eine einfache Montage zu ermöglichen. Die Rastnase kann sich vorzugsweise um den gesamten Umfang der Gleitlagerbuchse erstrecken, oder alternativ bevorzugt nur über einen Teil des Umfangs.

Weiter bevorzugt weist jede Hülse einen Pressbereich auf. Zwischen dem Pressbereich und der Durchgangsbohrung ist dabei ein Presssitz ausgebildet. Somit wird eine besonders zuverlässige und definierte Halterung und Kraftübertragung zwischen Hülsen und Antriebseinheit ermöglicht.

Vorzugsweise ist der Pressbereich, insbesondere unmittelbar, an den Flansch angrenzend angeordnet. Der Schaft jeder Hülse weist dabei zusätzlich einen Verjüngungsbereich auf, der einen kleineren Außendurchmesser als der Pressbereich aufweist, Insbesondere ist der Verjüngungsbereich somit auf einer dem Flansch gegenüberliegenden Seite des Pressbereichs angeordnet. Dadurch wird ermöglicht, dass der Verjüngungsbereich einfach und leichtgängig in die Durchgangsbohrung der Antriebseinheit eingeführt werden kann, um ein einfaches Einstecken der Hülsen in die Durchgangsbohrung zu ermöglichen.

Bevorzugt weist die Durchgangsbohrung einen Zentrierbereich auf, welcher mittig in der Durchgangsbohrung angeordnet ist, und welcher einen kleineren Innendurchmesser als der Rest der Durchgangsbohrung aufweist. Der Zentrierbereich ist vorgesehen zur Zentrierung der beiden Hülsen innerhalb der Durchgangsbohrung, insbesondere mittels der jeweiligen Verjüngungsbereiche. Bevorzugt ist dabei zwischen jedem Verjüngungsbereich und dem Zentrierbereich eine Spielpassung ausgebildet, sodass ein leichtgängiges Einstecken der Hülsen möglich ist, aber die Zentrierbereiche genau mittig in der Durchgangsbohrung ausgerichtet werden, für eine optimale Ausrichtung der beiden Hülsen.

Besonders bevorzugt ist der Durchgangsbolzen als Schraube ausgebildet und in ein Innengewinde der zweiten Wand eingeschraubt. Dadurch kann eine besonders einfache kostengünstige und aufgrund weniger Bauteile leichtgewichtige Antriebsanordnung bereitgestellt werden.

Bevorzugt ist der Durchgangsbolzen als Schraube ausgebildet und in eine Mutter, welche an der zweiten Wand angeordnet ist, eingeschraubt. Dadurch kann eine besonders robuste Verschraubung bereitgestellt werden, da beispielsweise Durchgangsbolzen und Mutter aus einem härteren Material als die Rahmenschnittstelle ausgebildet werden können. Beispielsweise kann durch Verwendung von Durchgangsbolzen und Mutter aus Stahl ein besonders hohes Drehmoment zum Verschrauben verwendet werden. Zudem kann im Falle einer Beschädigung des Innengewindes ein einfacher Austausch der Mutter erfolgen. Die Verwendung einer Mutter hat zudem den weiteren Vorteil, dass diese durch ein radial vorgegebenes Spiel einen Toleranzausgleich relativ zu der Wandöffnung der ersten Wand darstellt und somit immer exakt fluchtet.

Vorzugsweise ist die Mutter verdrehsicher in einer Ausnehmung der zweiten Wand angeordnet. Beispielsweise können Mutter und Ausnehmung dabei eine unrunde Geometrie aufweisen, beispielsweise in Form von, insbesondere bezüglich einer Achse einer Durchgangsöffnung durch die zweite Wand, tangentialen Abflachungen. Dadurch kann eine besonders einfache Montage der Antriebsanordnung ermöglicht werden.

Weiter bevorzugt weist der Flansch von zumindest einer Hülse eine vorbestimmte Dicke, insbesondere in Richtung parallel zu einer Längsrichtung der Hülse, auf, welche im Wesentlichen gleich einer Wandstärke des Schafts, insbesondere in radialer Richtung, ist. Alternativ bevorzugt weist der Flansch von zumindest einer Hülse eine vorbestimmte Dicke, insbesondere in Richtung parallel zu einer Längsrichtung der Hülse, auf, welche mindestens das 1,5-fache, bevorzugt mindestens das Doppelte, besonders bevorzugt mindestens das Dreifache, einer Wandstärke des Schafts, insbesondere in radialer Richtung, beträgt. Somit kann eine variable Breite der Antriebsanordnung bereitgestellt werden, welche auf besonders einfache und kostengünstige Weise eine Anpassung an unterschiedlich breite Rahmenschnittstelle ermöglicht.

Weiterhin führt die Erfindung zu einem Fahrzeug, bevorzugt einem mit Muskelkraft und/oder Motorkraft betreibbaren Fahrzeug, vorzugsweise einem Elektrofahrrad, welches die beschriebene Antriebsanordnung umfasst. Die Rahmenschnittstelle kann beispielsweise Teil eines Fahrzeugrahmens des Fahrzeugs sein.

Bevorzugt umfasst das Fahrzeug einen Fahrzeugrahmen. Die Rahmenschnittstelle der Antriebsanordnung ist dabei integraler Bestandteil des Fahrzeugrahmens, das heißt der Fahrzeugrahmen ist mit der Rahmenschnittstelle als ein einstückiges Bauteil ausgebildet, wobei die Antriebseinheit bevorzugt direkt, also insbesondere ohne zusätzliche dazwischen liegende Bauteile mit der Rahmenschnittstelle verbunden ist. Alternativ bevorzugt ist die Rahmenschnittstelle der Antriebsanordnung und/oder eine oder beide der Wände der Rahmenschnittstelle als ein separates Bauteil zum Fahrzeugrahmen ausgebildet und mit dem Fahrzeugrahmen verbunden, vorzugsweise verschraubt. Beispielsweise kann somit eine indirekte Befestigung der Antriebseinheit an der Rahmenschnittstelle erfolgen.

Besonders bevorzugt umfasst das Fahrzeug ferner ein Kettenblatt, welches mit einer Abtriebswelle der Antriebseinheit verbunden ist. Insbesondere sind Kurbelwelle und Abtriebswelle mechanisch miteinander gekoppelt. Die zweite Wand der Antriebsanordnung ist dabei auf der Seite des Kettenblatts angeordnet. Insbesondere wenn an der zweiten Wand eine Befestigung als Festlager und an der ersten Wand eine Befestigung als Loslager ausgebildet ist, kann dadurch eine optimale direkte Kraftübertragung zwischen Antriebseinheit und Kettenblatt erfolgen. Zudem wird eine präzise Positionierung des Kettenblatts, also einer genauen Kettenlinie, sichergestellt.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrzeugs mit einer Antriebsanordnung gemäß einem ersten Ausführungsbeispiel der Erfindung,
- Figur 2: ein Detail der Antriebsanordnung der Figur 1,
- Figur 3: ein Detail einer Antriebsanordnung gemäß einem zweiten Ausführungsbeispiel der Erfindung,
- Figur 4: ein Detail einer Antriebsanordnung gemäß einem dritten Ausführungsbeispiel der Erfindung,
- Figur 5: eine Schnittansicht der Antriebsanordnung der Figur 3,
- Figur 6: eine Schnittansicht einer Antriebsanordnung gemäß einem vierten Ausführungsbeispiel der Erfindung,
- Figur 7: eine Schnittansicht einer Antriebsanordnung gemäß einem fünften Ausführungsbeispiel der Erfindung,
- Figur 8A: eine Schnittansicht der Antriebsanordnung der Figuren 1 und 2 in vollständig verschraubtem Zustand,
- Figur 8B: eine Schnittansicht der Antriebsanordnung der Figuren 1 und 2 vor der Verschraubung,
- Figur 9: ein Detail der Figur 8A,
- Figur 10: eine perspektivische Detailansicht einer Montage der Antriebsanordnung der Figur 8A,
- Figur 11: ein Detail einer Antriebsanordnung gemäß einem sechsten Ausführungsbeispiel der Erfindung,
- Figur 12: eine Detail-Schnittansicht der Figur 11,
- Figur 13: eine Detail-Schnittansicht einer Antriebsanordnung gemäß einem siebten Ausführungsbeispiel der Erfindung,
- Figur 14: eine weitere Detail-Schnittansicht der Antriebsanordnung der Figur 13,
- Figur 15: eine Schnittansicht einer Antriebsanordnung gemäß einem achten Ausführungsbeispiel der Erfindung,
- Figur 16: eine Schnittansicht einer Antriebsanordnung gemäß einem neunten Ausführungsbeispiel der Erfindung,
- Figur 17: eine Schnittansicht einer Antriebsanordnung gemäß einem zehnten Ausführungsbeispiel der Erfindung, und
- Figur 18: eine Schnittansicht einer Antriebsanordnung gemäß einem elften Ausführungsbeispiel der Erfindung.

### Bevorzugte Ausführungsformen der Erfindung

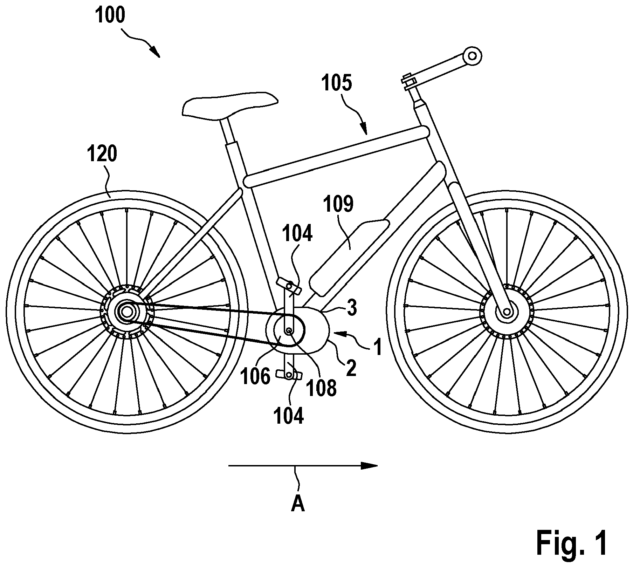

Figur 1 zeigt eine vereinfachte schematische Ansicht eines mit Muskelkraft und/oder Motorkraft betreibbaren Fahrzeugs 100, welches eine Antriebsanordnung 1 gemäß einem ersten Ausführungsbeispiel der Erfindung umfasst. Bei dem Fahrzeug 100 handelt es sich um ein Elektrofahrrad. Die Antriebsanordnung 1 ist im Bereich eines Tretlagers angeordnet und umfasst eine Antriebseinheit 2.

Die Antriebseinheit 2 umfasst einen Motor 21, welcher ein Elektromotor ist, und ein Getriebe 23. Die Antriebseinheit 2 ist vorgesehen, um mittels eines durch den Motor 21 erzeugten Drehmoments eine mittels Muskelkraft erzeugte Tretkraft des Fahrers zu unterstützen. Der Motor 21 der Antriebseinheit 2 wird dabei von einem elektrischen Energiespeicher 109 mit elektrischer Energie versorgt.

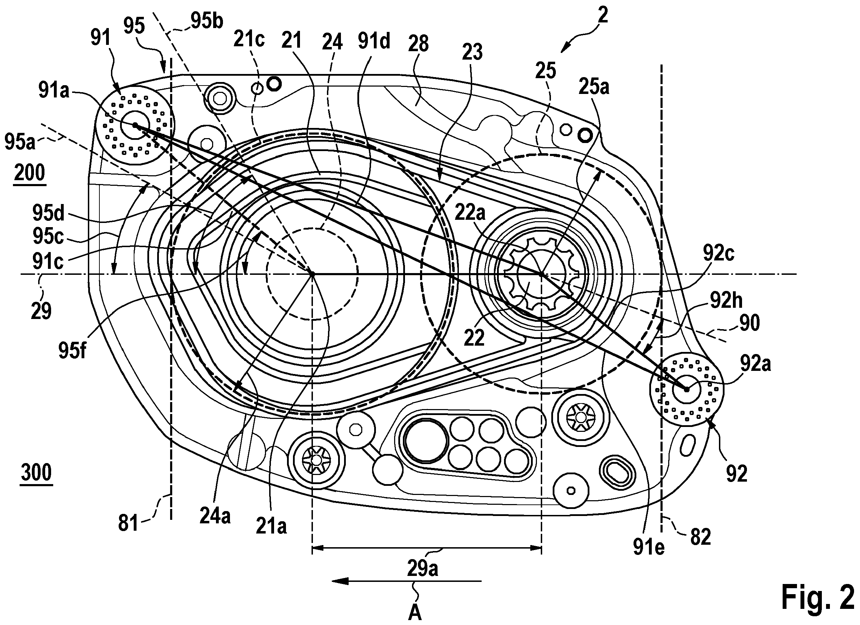

Die Antriebseinheit 2 ist in der Figur 2 in einer Seitenansicht vergrößert dargestellt. Die Antriebseinheit 2 umfasst eine Kurbelwelle 22, die mit Pedalen 104 des Elektrofahrrads 100 (vergleiche Figur 1) mechanisch koppelbar ist. Die Kurbelwelle 22 weist dabei eine Kurbelachse 22a auf, um die die Kurbelwelle 22 rotierbar ist.

Der Motor 21 weist (nicht dargestellt) einen Stator, der unbeweglich relativ zu einem Gehäuse 28 der Antriebseinheit 2 angeordnet ist, und einen Rotor, der innerhalb des Stators relativ zum Gehäuse rotierbar angeordnet ist, auf. Der Rotor ist um eine Motorachse 21a des Motors 21 rotierbar, wobei die Motorachse 21a und die Kurbelachse 22a parallel zueinander sind.

Das Getriebe 23 weist ein erstes Getrieberad 24 auf, das um die Motorachse 21a rotierbar ist, und das vorzugsweise drehfest mit dem Rotor verbunden ist. Zudem weist das Getriebe 23 ein zweites Getrieberad 25 auf, das um die Kurbelachse 22a rotierbar ist, und das vorzugsweise mit der Abtriebswelle 108 verbunden ist. Vorzugsweise weist das Getriebe 23 mindestens ein weiteres (nicht dargestelltes) Getrieberad auf, welches das erste Getrieberad 24 und das zweite Getrieberad 25 mechanisch miteinander gekoppelt. Das Getriebe 23 bildet damit ein mehrstufiges Getriebe, das eine Drehmomentübertragung zwischen Motor 21 und Kurbelwelle 22 erlaubt.

Das Getriebe 23 und der Motor 21 sind innerhalb des Gehäuses 28 der Antriebseinheit 2 angeordnet. Vorzugsweise können innerhalb des Gehäuses 28 zusätzlich weitere Komponenten, wie beispielsweise eine Elektronik, angeordnet sein. Das Gehäuse 28 dient insbesondere dem Schutz der Komponenten der Antriebseinheit 2 vor Umwelteinflüssen und dient zudem zur Halterung und Befestigung.

Das Gehäuse 28 weist einen ersten Befestigungsbereich 91 und einen zweiten Befestigungsbereich 92 auf, mittels welchen die Antriebseinheit 2 an einer Rahmenschnittstelle 3 des Fahrzeugs 100 befestigt werden kann, insbesondere durch Verschrauben mit der Rahmenschnittstelle 3. Die Befestigungsbereiche 91, 92 sind dabei insbesondere als Durchgangsbohrungen ausgebildet, mittels welcher beispielsweise eine Befestigung des Gehäuses 28 und damit der gesamten Antriebseinheit 2 mittels Bolzen und/oder Schrauben an der Rahmenschnittstelle 3 erfolgen kann. Die genauen Details dieser Befestigung werden später beschrieben.

Figur 2 zeigt die Antriebseinheit 2 in einer Ausrichtung, wie diese im am Fahrzeug 100 befestigten Zustand vorliegt. Der Motor 21 liegt dabei in Fahrtrichtung A (vergleiche auch Figur 1) vor der Kurbelwelle 22. Motorachse 21a und Kurbelachse 22a befinden sich im Wesentlichen auf gleicher vertikaler Höhe. Der erste Befestigungsbereich 91 liegt in Fahrtrichtung A vorne, wobei der zweite Befestigungsbereich 92 in Fahrtrichtung A hinten am Fahrzeug 100 liegt.

Zur Beschreibung der genauen Lage des ersten Befestigungsbereichs 91 ist eine Längsachse 29 definiert, welche die Kurbelachse 22a und die Motorachse 21a schneidet. Die Längsachse 29 liegt dabei in einer Schnittebene durch die Antriebseinheit 2, welche orthogonal zur Kurbelachse 22a ist. Zudem ist in dieser Schnittebene eine erste Linie 81 definiert, die orthogonal zur Längsachse 29 und tangential an einem Außenumfang 21c des Motors 21 angeordnet ist.

Ein erster Mittelpunkt 91a des ersten Befestigungsbereichs 91 ist dabei auf einer von der Kurbelachse 22a abgewandten Seite der ersten Linie 81 angeordnet. Mit anderen Worten liegt der erste Mittelpunkt 91a in Fahrtrichtung A vor der ersten Linie 81.

Die Längsachse 29 trennt einen Fahrzeug-zugewandten Bereich 200, der in vertikaler Richtung oben angeordnet ist, und einen Fahrzeug-abgewandten Bereich 300, der in vertikaler Richtung unten angeordnet ist, voneinander. Der erste Mittelpunkt 91a liegt dabei im Fahrzeug-zugewandten Bereich 200.

Ferner ist ein Befestigung-Sektor 95 definiert, der durch zwei Geraden 95a, 95b begrenzt ist. Die beiden Geraden 95a, 9 b schneiden jeweils die Motorachse 21a. Ein erster Winkel 95c zwischen der ersten Gerade 95a und der Längsachse 29 beträgt etwa 30°. Ein zweiter Winkel 95d zwischen der zweiten Gerade 95b und der Längsachse beträgt etwa 60°. Der erste Mittelpunkt 91a des ersten Befestigungsbereichs 91 liegt dabei innerhalb des Befestigung-Sektors 95.

Ein Winkel 95f zwischen der Längsachse 29 und einer Geraden, die den ersten Mittelpunkt 91a mit der Motorachse 21a verbindet, beträgt dabei etwa 45°.

Weiterhin ist der erste Mittelpunkt 91a in einem vorbestimmten ersten Abstand 91c von der Motorachse 21a angeordnet. Der erste Abstand 91c beträgt dabei etwa 160 % eines maximalen Radius 24a des Motors 21, insbesondere des Stators des Motors 21.

Zudem ist der erste Mittelpunkt 91a in einem vorbestimmten zweiten Abstand 91d von der Kurbelachse 22a angeordnet. Der zweite Abstand 91d beträgt dabei etwa 190 % eines Längsabstands 29a der Motorachse 21a und der Kurbelachse 22a voneinander.

In dem in Figur 2 dargestellten ersten Ausführungsbeispiel ist ein zweiter Mittelpunkt 92a des zweiten Befestigungsbereichs 92 im Fahrzeug-abgewandten Bereich 300 angeordnet.

Dabei ist in der Schnittebene durch die Antriebseinheit 2 eine zweite Linie 82 definiert, die ebenfalls orthogonal zur Längsachse 29 angeordnet ist und die zudem tangential an einem Außenumfang des zweiten Getrieberads 25 angeordnet ist. Der zweite Mittelpunkt 92a des zweiten Befestigungsbereichs 92 ist dabei auf einer der Motorachse 22a abgewandten Seite der zweiten Linie 82 angeordnet, das heißt in Fahrtrichtung A hinter der zweiten Linie 82.

Ein vierter Winkel 92h zwischen einer Befestigungsachse 90, auf welcher der erste Mittelpunkt 91a liegt, und welche die Kurbelachse 22a schneidet, und einer Verbindungslinie 92c von Kurbelachse 22a und zweitem Mittelpunkt 92a beträgt etwa 20°.

Bezüglich der Befestigungsachse 90 liegen der zweite Mittelpunkt 92a und die Motorachse 21a in der Schnittebene auf derselben Seite der Befestigungsachse 90, nämlich Fahrzeug-abgewandt.

Ein dritter Abstand 91e des ersten Mittelpunkts 91a und zweiten Mittelpunkts 92a voneinander beträgt etwa 140 % des zweiten Abstands 91d des ersten Mittelpunkts 91a von der Kurbelachse 22a. Insbesondere ist der dritte Abstand 91e signifikant größer, und beträgt vorzugsweise mindestens das Doppelte eines Achsabstands 29a der beiden Achsen 21a, 22a voneinander.

Ferner beträgt ein vierter Abstand 92c des zweiten Mittelpunkts 92a von der Kurbelachse 22a etwa 170 % eines maximalen Radius des zweiten Getrieberads 25.

Die spezielle Anordnung der Befestigungsbereiche 91, 92 bietet dabei zahlreiche Vorteile. Insbesondere wird eine vorteilhafte mechanische Befestigung bei gleichzeitiger Kompaktheit und Möglichkeit der Gewichteinsparung ermöglicht. Durch die Anordnung des ersten Befestigungsbereichs 91 auf der der Kurbelachse 22a abgewandten Seite der ersten Linie 81 ergibt sich ein großer Abstand zwischen erstem Befestigungsbereich 91 und Kurbelachse 22a. Somit liegt ein großer Hebelarm zwischen diesen beiden Punkten vor. Dadurch können an der Kurbelwelle 22a in die Antriebseinheit 2 eingeleitete Kräfte, insbesondere durch eine Pedalbetätigung eines Fahrers des Fahrzeugs 100, optimal an einer Rahmenschnittstelle 3 bzw. von der Rahmenschnittstelle 3 aufgenommen werden. Gleichzeitig wird durch einen großen Abstand der beiden Befestigungsbereiche 91, 92, welche insbesondere eine maximale Länge der gesamten Antriebseinheit 2 möglichst ausnutzt, eine breite bzw. weit gestreckte Abstützung der auftretenden mechanischen Kräfte mittels der beiden Befestigungsbereiche 91, 92 erfolgen.

Insbesondere bilden die beiden Befestigungsbereiche 91, 92 zusammen mit der Kurbelwelle 22 ein Kräftedreieck, an dessen Ecken die beim Betrieb der Antriebseinheit 2 auftretenden relevanten Kräfte angreifen. Durch die spezielle Lage der Befestigungsbereiche 91, 92 resultieren optimale Hebelverhältnisse, um die beim Betrieb auftretenden Kräfte gut verteilen bzw. aufnehmen zu können. Durch die breite Abstützung können die auftretenden Kräfte an den beiden Befestigungsbereichen im 91, 92 optimal in die Rahmenschnittstelle 3 eingeleitet werden, ohne dass dabei beispielsweise hohe Beanspruchungen auftreten, die eine erhöhte Dimensionierung von Wandstärken oder dergleichen erfordert, was zu einem unnötig hohen Materialaufwand und Gewicht führen würde. Besonders vorteilhaft ist bei der speziellen Anordnung der Befestigungsbereiche 91, 92, dass ein resultierender Krafteinleitungspunkt einer Kettenkraft beim Pedalieren zwischen den beiden Befestigungsbereichen 91, 92 liegt. Dadurch kann eine besonders gleichmäßige Abstützung erfolgen.

Durch die spezielle Lage und relative Anordnung der beiden Befestigungsbereiche 91, 92 wird zudem eine vorteilhafte Geometrie der Antriebseinheit 2 bereitgestellt. Insbesondere weist das Gehäuse 28 eine flache und lang gestreckte Geometrie auf, das heißt eine in vertikaler Richtung geringe Bauhöhe und eine in horizontaler Richtung größere Länge. Beispielsweise kann dadurch der weitere Vorteil erreicht werden, dass im Bereich des Tretlagers des Fahrzeugs 100 eine größere Bodenfreiheit ermöglicht werden kann.

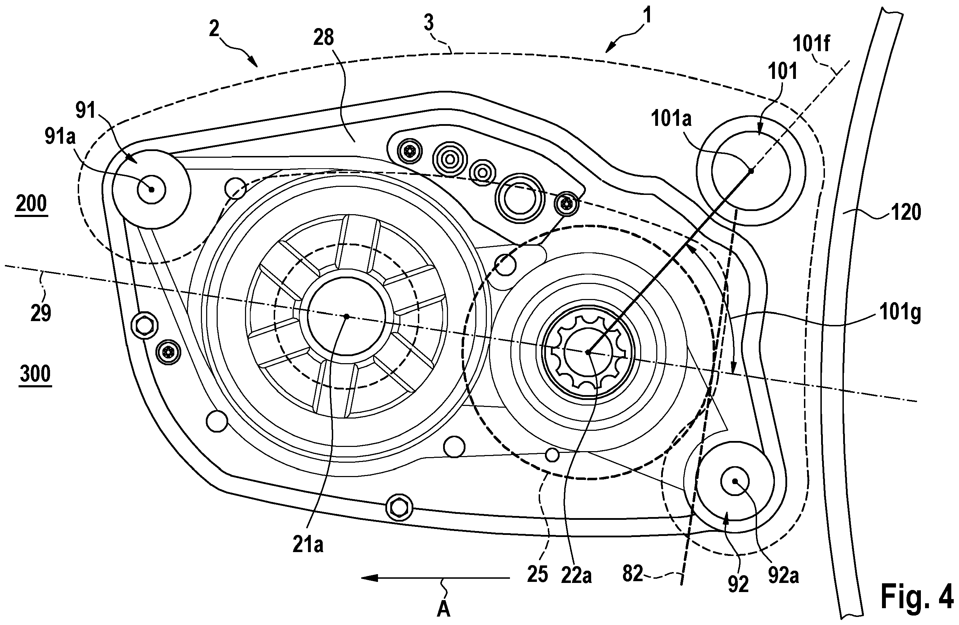

Weiterhin erlaubt die in der Figur 2 dargestellte Konfiguration eine optimale Anbringung eines Gelenksbereichs 101 eines vollgefederten Fahrrads, wie dies beispielsweise in Figur 4 zu erkennen ist.

Figur 4 zeigt dabei ein Detail einer Antriebsanordnung 1 gemäß einem dritten Ausführungsbeispiel der Erfindung. Das dritte Ausführungsbeispiel entspricht im Wesentlichen dem ersten Ausführungsbeispiel der Figuren 1 und 2, insbesondere mit einer identischen geometrischen Ausgestaltung der Antriebseinheit 2, wobei die Rahmenschnittstelle 3 und das Fahrzeug 100 alternativ ausgebildet sind. In der Figur 4 ist die Rahmenschnittstelle 3 gestrichelt angedeutet. Im Detail handelt es sich bei dem Fahrzeug 100 hierbei um ein vollgefedertes Elektrofahrrad. Dabei ist in der Rahmenschnittstelle 3 als Gelenksbereich 101 eine Bohrung in der Rahmenschnittstelle 3 vorgesehen, welche zur Aufnahme eines Hauptlagers, zur Lagerung eines Hinterbaus des Fahrzeugs 100 eingerichtet ist.

Der Gelenksbereich 101 ist dabei im Fahrzeug-zugewandten Bereich 200 angeordnet. Ein Mittelpunkt 101a des Gelenksbereichs 101 liegt etwa auf der zweiten Linie 82. Ferner kann der Mittelpunkt 101a vorzugsweise auf einer Linie 101f liegen, welche die Kurbelachse 22a schneidet und in einem Winkel 101g von etwa 55° zur Längsachse 29 angeordnet ist.

Dadurch, dass der zweite Befestigungsbereich 92 unten angeordnet ist, steht oben im Fahrzeug-zugewandten Bereich 200 und im Bereich der zweiten Linie 82 besonders viel Platz zur Verfügung, um den Gelenksbereich 101 optimal anordnen zu können. Insbesondere kann der Gelenksbereich 101 dabei möglichst nahe an der Kurbelachse 22a angeordnet werden, was sich besonders vorteilhaft auf eine Hinterbau-Kinematik des vollgefederten Elektrofahrrads auswirkt, insbesondere indem eine Kettenstrebe dadurch kurz gehalten werden kann.

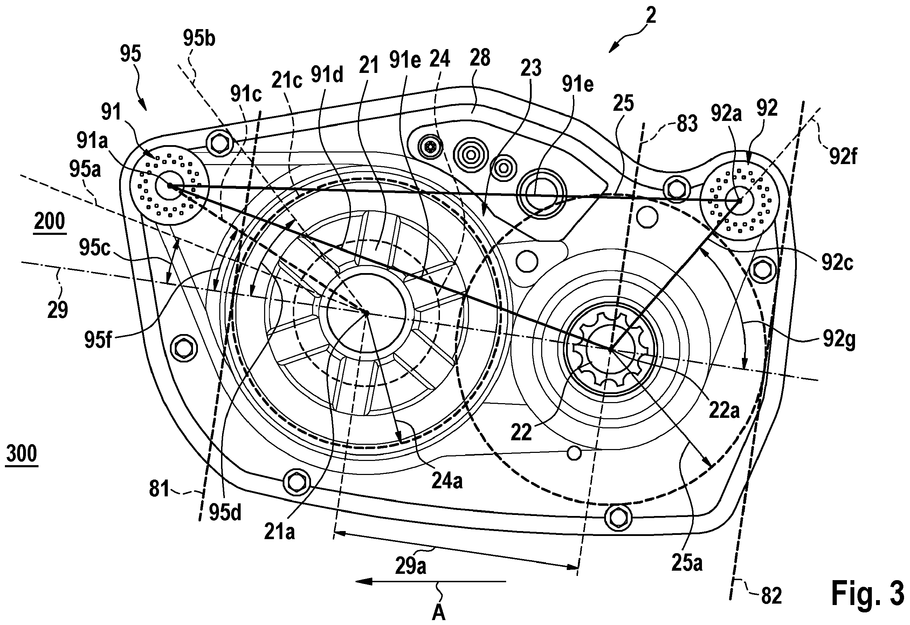

Figur 3 zeigt eine Detailansicht einer Antriebsanordnung 1 gemäß einem zweiten Ausführungsbeispiel der Erfindung. Das zweite Ausführungsbeispiel entspricht im Wesentlichen dem ersten Ausführungsbeispiel der Figuren 1 und 2, mit dem Unterschied einer alternativen Anordnung des zweiten Befestigungsbereichs 92.

Im zweiten Ausführungsbeispiel der Figur 3 ist der zweite Befestigungsbereich 92 im Fahrzeug-zugewandten Bereich 200 angeordnet. Zudem ist der zweite Befestigungsbereich 92 innerhalb der zweiten Linie 82, das heißt, auf der der Motorachse 21a zugewandten Seite der zweiten Linie 82 angeordnet.

Dabei ist zusätzlich eine dritte Linie 83 definiert, die orthogonal zur Längsachse 29 ist, und welche die Kurbelachse 22a schneidet. Der zweite Mittelpunkt 92a des zweiten Befestigungsbereichs 92 ist dabei zwischen der zweiten Linie und der dritten Linie 83 angeordnet.

Ferner ist eine dritte Gerade 92f definiert, welche die Kurbelachse 22a schneidet, und auf welcher der zweite Mittelpunkt 92a liegt. Dabei beträgt ein dritter Winkel 92g zwischen der dritten Geraden 92f und der Längsachse 29 etwa 55°. Der vierte Abstand 92c kann dabei beispielsweise auf ein Minimum reduziert sein, sodass der zweite Verbindungsbereich 92 radial außen unmittelbar an das zweite Getrieberad 25 angrenzt.

Der dritte Abstand 91e des ersten Mittelpunkts 91a und des zweiten Mittelpunkts 92a voneinander ist dabei unter Beibehaltung einer möglichst kompakten Antriebseinheit 2 in Längsrichtung maximal gewählt. Insbesondere ist der dritte Abstand 91e ebenfalls signifikant größer als, und beträgt vorzugsweise mindestens das Doppelte des Achsabstands 29a der beiden Achsen 21a, 22a voneinander.

Somit kann eine alternative Konfiguration der Antriebseinheit 2 bereitgestellt werden, welche durch die weit auseinanderliegenden und optimal angeordneten Befestigungsbereiche 91, 92 einerseits eine optimale mechanische Abstützung und Befestigung an der Rahmenschnittstelle 3 erlauben, und andererseits eine möglichst kompakte Antriebseinheit 2 sicherstellen.

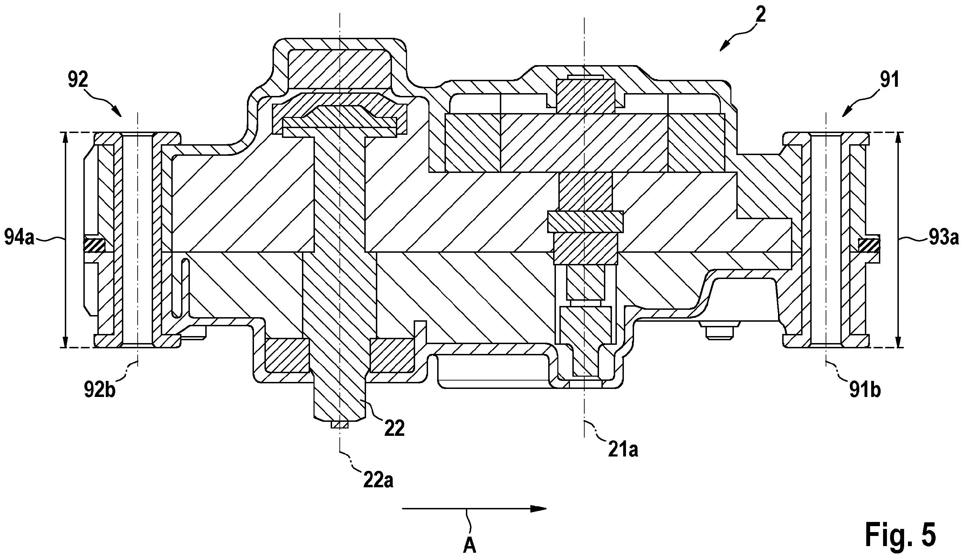

Nachfolgend werden unter Bezugnahme auf die Figuren 5 bis 7 Ausführungsbeispiele beschrieben, welche jeweils Schnittansichten in einer alternativen Schnittebene, in der entsprechende Befestigungsachsen 91b, 92b der Befestigungsbereiche 91, 92 liegen.

Figur 5 zeigt dabei eine Schnittansicht der Antriebseinheit 2 der Figur 3. Wie in der Figur 3 zu erkennen, weist die Antriebseinheit 2 an jedem der Befestigungsbereiche 91, 92 eine maximale Breite 93a, 94a entlang einer entsprechenden Richtung der Befestigungsachse 91b, 92b auf. Die maximale Breite 93a, 94a ist dabei an beiden Befestigungsbereichen 91, 92 identisch.

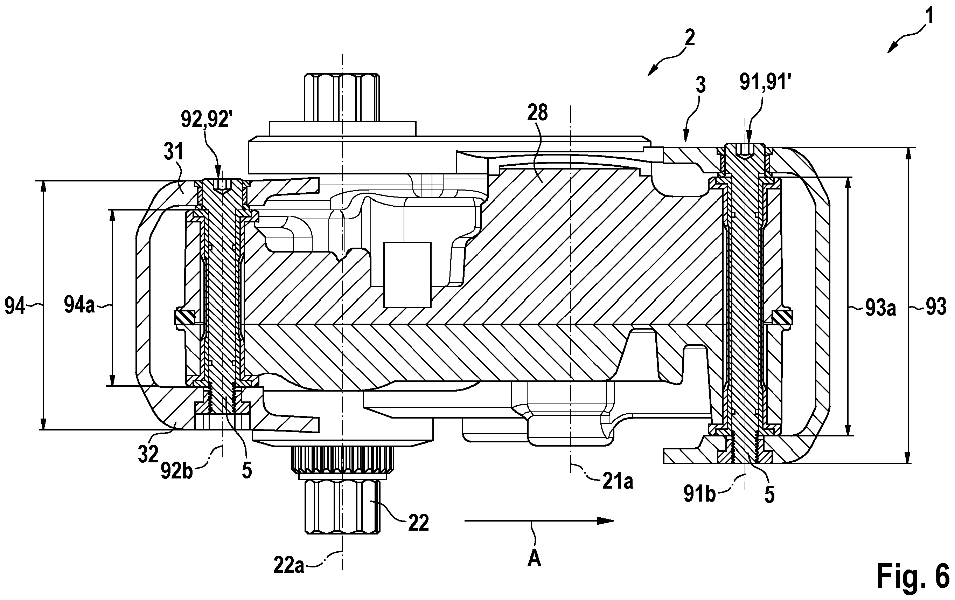

Figur 6 zeigt eine Schnittansicht einer Antriebsanordnung 1 gemäß einem vierten Ausführungsbeispiel der Erfindung. Das vierte Ausführungsbeispiel entspricht im Wesentlichen dem zweiten Ausführungsbeispiel der Figuren 3 und 5, mit dem Unterschied, dass unterschiedliche Breiten an den beiden Befestigungsbereichen 91, 92 vorgesehen sind. Im Detail ist die maximale Breite 93 der Rahmenschnittstelle 3 an einem ersten Anbindungsbereich 91', an dem der erste Befestigungsbereich 91 befestigt ist, größer als die maximale Breite 94 an einem zweiten Anbindungsbereich 92', an dem der zweite Befestigungsbereich 92 befestigt ist. Der erste Anbindungsbereich 91' liegt dabei in Fahrtrichtung A vor dem zweiten Anbindungsbereich 92'. Damit kann eine besonders robuste Konstruktion durch eine besonders stabile Abstützung an dem ersten Anbindungsbereich 91' erfolgen. Dies hat den weiteren Vorteil, dass die Rahmenschnittstelle 3 im Bereich des ersten Anbindungsbereich 91' besonders breit und großvolumig ausgestaltet werden kann, was beispielsweise die Montage eines größeren Energiespeichers 109 vereinfachen kann.

Im vierten Ausführungsbeispiel der Figur 6 weist das Gehäuse 28 der Antriebseinheit 2 an den Befestigungsbereichen 91, 92 entsprechend an die Breiten 93, 94 angepasste maximale Breiten 93a, 94a auf.

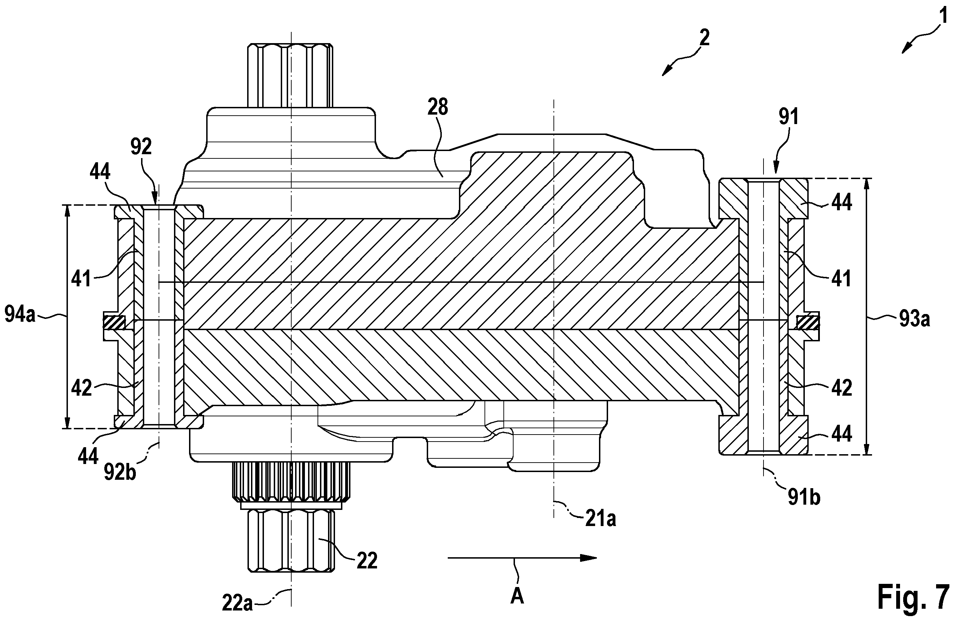

Figur 7 zeigt eine Schnittansicht einer Antriebseinheit 2 einer Antriebsanordnung 1 gemäß einem fünften Ausführungsbeispiel der Erfindung. Das fünfte Ausführungsbeispiel entspricht im Wesentlichen dem vierten Ausführungsbeispiel der Figur 6, mit dem Unterschied, dass das Gehäuse 28 der Antriebseinheit 2 an beiden Befestigungsbereichen 91, 92 gleich breit ist. Beispielsweise kann die Antriebseinheit 2 der Figur 7 der Antriebseinheit der Figur 5 entsprechen.

Im fünften Ausführungsbeispiel der Figur 7 werden mittels unterschiedlicher Hülsen 41, 42 an den beiden Befestigungsbereichen 91, 92 unterschiedliche maximale Breiten 93a, 94a der Antriebseinheit 2 bereitgestellt. Im Detail werden dabei am ersten Befestigungsbereich 91 Hülsen 41, 42 verwendet, welche dickere Flansche 44 im Vergleich zu den Hülsen 41, 42 am zweiten Befestigungsbereich 92 aufweisen. Damit kann die Antriebseinheit 2 auf besonders einfache und kostengünstige Weise an die Rahmenschnittstelle 3 mit unterschiedlichen Breiten 93, 94 angepasst werden.

Nachfolgend erfolgt die genaue Beschreibung der Verschraubung der Antriebseinheit 2 mit der Rahmenschnittstelle 3 des Fahrzeugs 100.

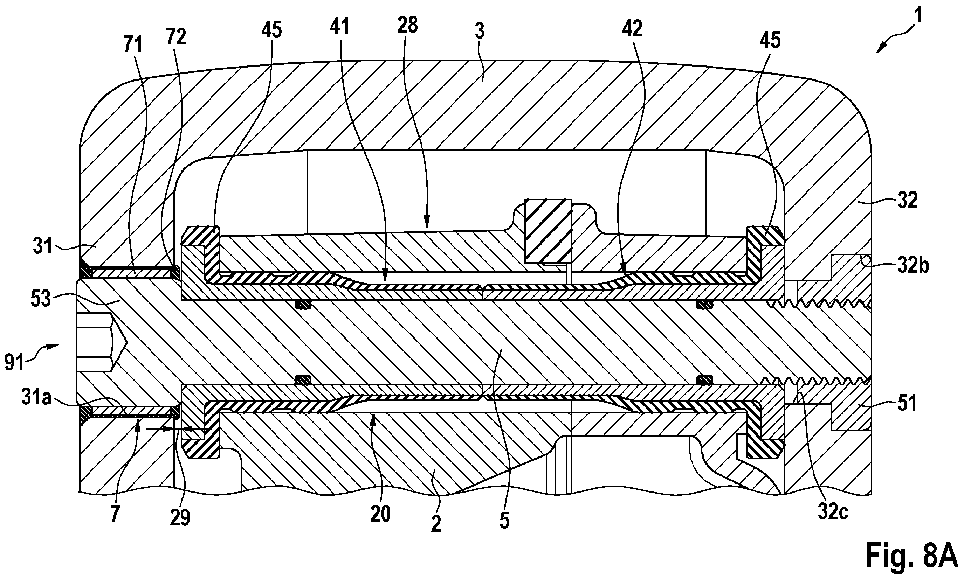

Die Antriebsanordnung 1 des ersten Ausführungsbeispiels ist dabei in einer Schnittansicht in Figur 8A dargestellt. Die Antriebsanordnung 1 umfasst eine U-förmige Rahmenschnittstelle 3, innerhalb der die Antriebseinheit 2 teilweise aufgenommen ist. Die Rahmenschnittstelle 3 ist ein integraler Bestandteil eines Fahrzeugrahmens 105 des Fahrzeugs 100 (vgl. Figur 1). Die Rahmenschnittstelle 3 weist dabei eine erste Wand 31 und eine zweite Wand 32 auf, zwischen welchen die Antriebseinheit 2 angeordnet ist. Die erste Wand 31 und die zweite Wand 32 sind über eine Verbindungswand 33 miteinander verbunden und damit als ein gemeinsames einstückiges Bauteil ausgebildet.

Die Antriebseinheit 2 ist mittels einer Durchsteckverschraubung an der Rahmenschnittstelle 3 befestigt, wie nachfolgend näher beschrieben.

Im Detail weist die Antriebseinheit 2 eine Durchgangsbohrung 20 auf, die die Antriebseinheit 2 in Querrichtung vollständig durchdringt. Insbesondere ist die Durchgangsbohrung 20 in dem Gehäuse 28, welches bevorzugt aus Aluminium oder Magnesium gebildet ist, der Antriebseinheit 2 ausgebildet. Das Gehäuse 28 der Antriebseinheit 2 kann zweiteilig ausgebildet sind, wobei eine Gehäusedichtung 2c zwischen den beiden Gehäusehälften 2a, 2b angeordnet ist.

In die Durchgangsbohrung 20 sind zwei Hülsen 41, 42 eingesteckt. Die beiden Hülsen 41, 42 sind dabei ausgehend von jeweils einer Seite, das heißt an einem axialen Ende der Durchgangsbohrung 20, in die Durchgangsbohrung 20 eingesteckt. Die Hülsen 41, 42 sind bevorzugt aus Aluminium oder Stahl gebildet.

Jede Hülse 41, 42 weist einen Schaft 43, welcher im Wesentlichen hohlzylindrisch ausgebildet ist und in die Durchgangsbohrung 20 eingesteckt ist, und einen Flansch 44 auf. Der Flansch 44 ist außerhalb der Durchgangsbohrung 20 angeordnet und weist einen größeren Außendurchmesser als der Schaft 43 auf.

Der Schaft 43 weist dabei einen Pressbereich 43a auf, der unmittelbar an den Flansch 44 angrenzend angeordnet ist. Der Pressbereich 43a ist dabei so ausgebildet, dass zwischen dem Pressbereich 43a und der Durchgangsbohrung 20 ein Presssitz, das heißt eine Presspassung, ausgebildet ist.

Mittig in der Durchgangsbohrung 20 ist ein Verjüngungsbereich 20a ausgebildet, in welchem ein Innendurchmesser der Durchgangsbohrung 20 verjüngt ist. Zwischen dem Verjüngungsbereich 20a und den Hülsen 41, 42 ist vorzugsweise eine Spielpassung ausgebildet. Dadurch kann der Verjüngungsbereich 20a eine Zentrierung der Hülsen 41, 42 und somit eine einfache und präzise Anordnung der Hülsen 41, 42 bewirken. Vorzugsweise ist hierbei jedoch eine Passung mit großem Spiel vorgesehen, um eine gewisse Kippbewegung der Hülsen 41, 42 innerhalb der Durchgangsbohrung 20 zu erlauben, um eine zuverlässige akustische Entkopplung sicherzustellen, beispielsweise während eines Fahrrad-Wiegetritts.

Bevorzugt sind die beiden Hülsen 41, 42 identisch ausgebildet, für eine einfache und kostengünstige Herstellung.

Axiale Längen der Hülsen 41, 42, insbesondere jeweils des Schaft 43, sind derart ausgelegt, dass sich die Hülsen 41, 42 in eingestecktem und vollständig verschraubten Zustand (wie später beschrieben) innerhalb der Durchgangsbohrung 20 berühren.

Zudem umfasst die Antriebsanordnung 1 einen Durchgangsbolzen 5, welcher durch die Durchgangsbohrung 20 und die beiden Hülsen 41, 42 durchgesteckt ist. Der Durchgangsbolzen 5 ist als Schraube ausgebildet und weist an einem axialen Ende einen Bolzenkopf 53 und am anderen axialen Ende ein Außengewinde 54 auf, wobei sich das Außengewinde 54 nur über einen Teilbereich des Durchgangsbolzens 5 erstreckt.

Mittels des Außengewindes 54 ist der Durchgangsbolzen 5 in eine Mutter 51 an der zweiten Wand 32 der Rahmenschnittstelle 3 eingeschraubt. Der Bolzenkopf 53 befindet sich dabei auf der Seite der ersten Wand 31, und liegt insbesondere an einer Außenseite der ersten Wand 31 an.

Bevorzugt ist zwischen dem Durchgangsbolzen 5 und einer inneren Durchgangsöffnung der Hülsen 41, 42 jeweils eine Spielpassung ausgebildet, um ein einfaches Durchstecken zu ermöglichen. An den Bereichen des Durchgangsbolzens 5 innerhalb jeder Hülse 41, 42 ist bevorzugt jeweils eine Dichtung, beispielsweise eine O-Ring-Dichtung 56, zwischen Durchgangsbolzen 5 und Hülse 41 bzw. 42 angeordnet, um einen Fluideintritt ins Innere der Hülsen 41, 42 und ins Innere der Durchgangsbohrung 20 zu vermeiden

Der Durchgangsbolzen 5 ist dabei derart eingeschraubt, dass dieser die beiden Hülsen 41, 42 in axialer Richtung des Durchgangsbolzens 5 gegen die zweite Wand 32 verspannt. Durch die Hülsen 41, 42 wird dabei sichergestellt, dass diese Verspannung zu keiner oder einer genau definierten Druckbelastung der Antriebseinheit 2 in axialer Richtung zwischen den Flanschen 44 der beiden Hülsen 41, 42 führt. Insbesondere wird durch die Durchsteckverschraubung mittels des Durchgangsbolzens 5 eine Zugbelastung der Antriebseinheit 2 vermieden.

Die spezielle Durchsteckverschraubung der Antriebsanordnung 1 bietet dabei zahlreiche Vorteile. Beispielsweise erlaubt die Verwendung des Durchgangsbolzens 5 eine besonders robuste Befestigung der Antriebseinheit 2. Insbesondere kann eine Verschraubung mit hohem Drehmoment erfolgen. Durch die Aufnahme hoher Druckkräfte mittels der Hülsen 41, 42 wird dabei eine unzulässig hohe mechanische Beanspruchung der Antriebseinheit 2 besonders zuverlässig vermieden. Zudem kann beispielsweise durch Anpassung der Hülsen 41, 42 einfach und kostengünstig eine Toleranzlage der Antriebsanordnung 1 definiert eingestellt werden. Ferner erlaubt die Durchsteckverschraubung eine besonders einfache Montage der Antriebsanordnung 1, da das Einstecken des Durchgangsbolzens 5 und eine Betätigung des Durchgangsbolzens 5 zum Einschrauben nur von einer Seite, nämlich von der Seite der ersten Wand 31, aus durchgeführt werden kann. Dies ist insbesondere vorteilhaft bei eingeschränkter Zugänglichkeit auf der Seite der zweiten Wand 32, beispielsweise, wenn sich auf dieser Seite ein Kettenblatt 106 (vergleiche Figur 1) befindet.

Zusätzlich umfasst jede Hülse 41, 42 ein Dämpfungselement 45, welches aus einem elastischen und schwingungsdämpfenden Material gebildet ist. Insbesondere ist das Dämpfungselement 45 aus einem Elastomer gebildet. Im Detail ist dabei jeweils eine radial äußere Außenseite des Schafts 43, des Flansches 44, sowie diejenige Seite des Flansches 44, welche zur Antriebseinheit 2 gewandt ist, mit dem Dämpfungselement 45 überdeckt bzw. überzogen. Vorzugsweise ist das Dämpfungselement 45 somit in Form einer Umspritzung der Hülse 41, 42 ausgebildet.

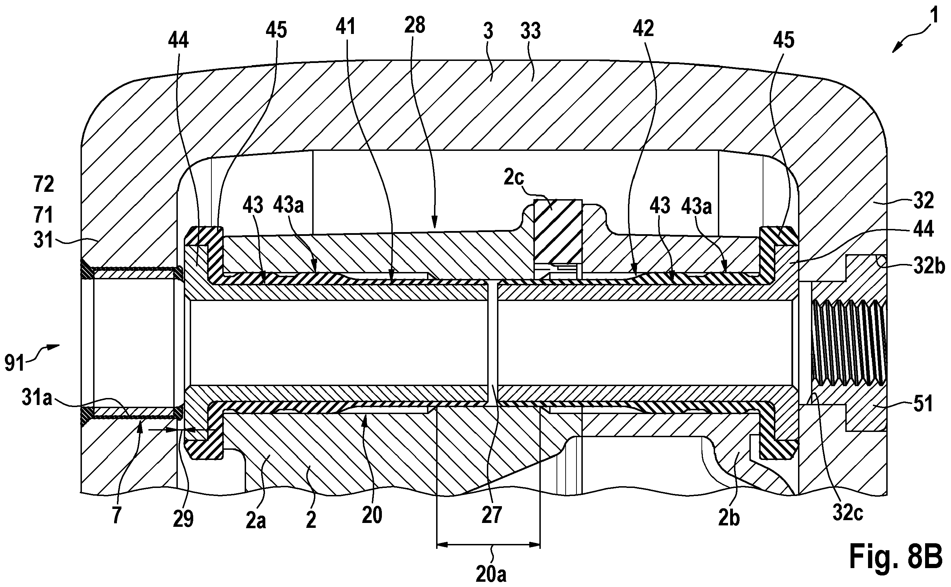

Ferner sind die axialen Längen der Schäfte 43 der Hülsen 41, 42 derart ausgebildet, dass im vollständig in die Durchgangsbohrung 20 eingestecktem und durch den Durchgangsbolzen 5 noch nicht verspanntem Zustand, wie dies in Figur 8B dargestellt ist, ein vordefinierter Axialabstand 27, das heißt ein Spalt, zwischen den beiden Hülsen 41, 42 im Inneren der Durchgangsbohrung 20 vorliegt. Betrachtet wird dabei ein Zustand, in welchem die beiden Hülsen 41, 42 unverspannt sind, jedoch das Dämpfungselement 45 im Bereich jedes Flansches 44 jeder Hülse 41, 42 an der Antriebseinheit 2 anliegt. Insbesondere sind hierbei die axialen Längen der beiden Schäfte 43 um eine vorbestimmte Differenz kleiner als die Hälfte der axialen Länge der Durchgangsbohrung 20, wobei die vorbestimmte Differenz kleiner als die doppelte Dicke von einem der Dämpfungselemente 45 im Bereich des Flansches 44 ist.

In dem in Figur 8A gezeigten vollständig verschraubtem Zustand liegt zwischen erster Wand 31 und erster Hülse 41 ein vordefinierter Spalt 29 vor.

Durch diese spezielle Abstimmung der Längen der beiden Hülsen 41, 42 und der Durchgangsbohrung 20 wird erreicht, dass jeweils der zwischen Flansch 44 und Antriebseinheit 2 liegende Teil des Dämpfungselements 45 jeder Hülse 41, 42 zwischen Flansch 44 und Antriebseinheit 2 durch die Verspannung mittels des Durchgangsbolzens 5 teilweise verpresst bzw. eingeklemmt und dadurch elastisch verformt wird.

Die Dämpfungselemente 45 und die entsprechende Auslegung der Hülsen 41, 42 mit Axialabstand in unverspanntem Zustand führt dazu, dass im verspannten Zustand eine geringfügige Druckbelastung auf die Antriebseinheit 2 ausgeübt wird. Dies kann sich vorteilhaft auf eine Dichtigkeit der Antriebseinheit 2 selbst auswirken. Zudem wird durch das elastische Verformen der Dämpfungselemente 45 eine besonders zuverlässige Abdichtung zwischen den Hülsen 41, 42 und der Antriebseinheit 2 ermöglicht.

In der Figur 1 ist zudem eine Abtriebswelle 108 dargestellt, welche mit einem Kettenblatt 106 drehfest verbunden ist. Die Abtriebswelle 108 ist dabei einerseits über die Kurbelwelle 22 durch die Muskelkraft des Fahrers und andererseits durch die Motorkraft der Antriebseinheit 2 antreibbar. Das Kettenblatt 106 befindet sich dabei auf der Seite der zweiten Wand 32. Dadurch ergibt sich wie bereits oben erwähnt, die vorteilhafte Zugänglichkeit und vereinfachte Montage der Antriebsanordnung 1. Ferner ergibt sich dadurch der Vorteil einer direkten Kraftübertragung zwischen Abtriebswelle 108 und Rahmenschnittstelle 3, welche aufgrund der höheren mechanischen Kräfte auf der Kettenblatt-Seite durch die direkte und robuste Anbindung mittels der zweiten Wand 32 besonders gut aufgenommen werden können. Zudem wird dadurch eine definierte Lage des Kettenblatts 106 bezogen auf eine axiale Richtung der Abtriebswelle 108 und relativ zur Rahmenschnittstelle 3 sichergestellt, was den Vorteil einer zuverlässig präzise angeordneten Kettenlinie bringt.

Ferner ergibt sich durch die Verbindung von Antriebseinheit 2 und Rahmenschnittstelle 3 über die Dämpfungselemente 45 der Vorteil einer schwingungsentkoppelten Halterung der Antriebseinheit 2 am Fahrzeug 100. Neben einer Verhinderung oder Reduzierung einer Übertragung von akustischen Schwingungen, was sich vorteilhaft auf eine Reduzierung von Geräuschen beim Betrieb des Fahrzeugs 100 auswirkt, wird auch eine Übertragung mechanischer Schwingungen reduziert oder verhindert. Dadurch kann eine schädigende Wirkung derartiger Schwingungen auf die Verschraubung verhindert oder reduziert werden. Das heißt, ein Lockern oder Aufarbeiten der Verschraubung kann verhindert oder reduziert werden. Zudem kann durch die Elastizität des Dämpfungselements 45 selbst ein gewisser Toleranzausgleich, beispielsweise im Hinblick auf eine Koaxialität der Bohrungen oder Öffnungen oder dergleichen erfolgen.

Zusätzlich ist an der ersten Wand 31 eine axial bewegliche Halterung des Durchgangsbolzen 5 vorgesehen. Dabei befindet sich der Bolzenkopf 53 des Durchgangsbolzens 5 innerhalb einer Wandöffnung 31a der ersten Wand 31. Somit kann bei einer besonders steifen und robusten Rahmenschnittstelle 3 ein optimaler Toleranzausgleich bereitgestellt werden.

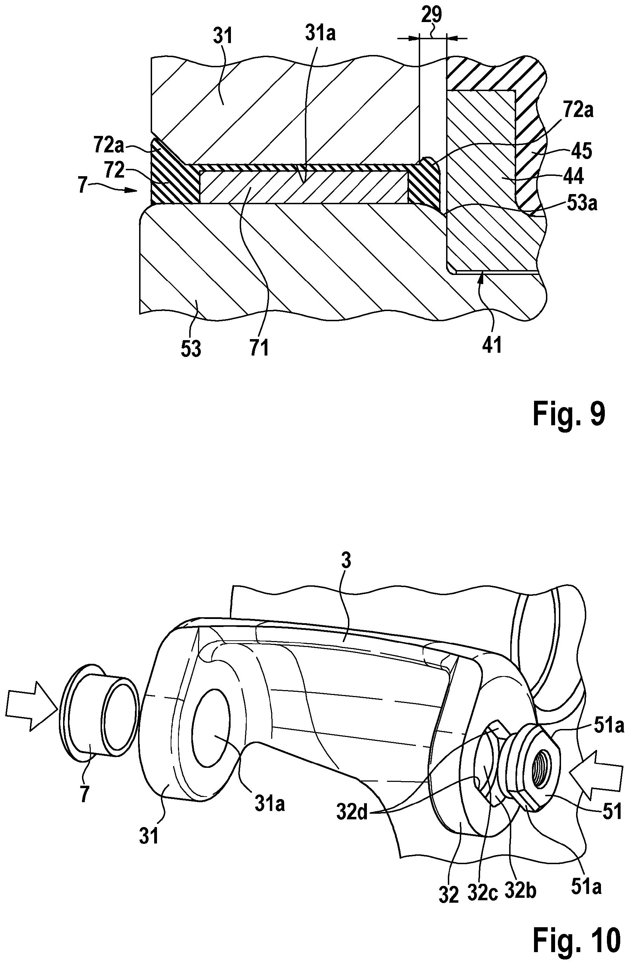

Die axial bewegliche Halterung wird mittels eines Toleranzausgleichselements 7 erreicht. Diese Halterung mit dem Toleranzausgleichselement 7 ist vergrößert in Figur 9 dargestellt. Das Toleranzausgleichselement 7 umfasst dabei eine hohlzylindrische Gleitlagerbuchse 71 und eine Dämpfungshülle 72. Die Dämpfungshülle 72 ist insbesondere aus einem elastischen Material, vorzugsweise einem Elastomer, ausgebildet. Die Dämpfungshülle 72 umgibt dabei im Wesentlichen vollständig eine radial äußere Seite der Gleitlagerbuchse 71, wobei beispielsweise auch (nicht dargestellte) Ausnehmungen in der Dämpfungshülle 72 vorgesehen sein können. Zusätzlich bedeckt die Dämpfungshülle 72 beide axialen Stirnseiten der Gleitlagerbuchse 71 zumindest teilweise. An der radial inneren Seite liegt die Gleitlagerbuchse 71 frei, sodass der Bolzenkopf 53 sich leichtgängig mit geringer Reibung relativ zum Toleranzausgleichselement 7 bewegen kann.

Die Gleitlagerbuchse 71 kann bevorzugt entlang der Umfangsrichtung aus einem Vollmaterial gebildet sein, oder alternativ geschlitzt ausgebildet sein, das heißt mit einem Längsschlitz in Axialrichtung. In beiden Fällen ist die Gleitlagerbuchse 71 bevorzugt derart ausgebildet, dass durch das Einschrauben des Durchgangsbolzens 5 und somit durch das Eindringen des Bolzenkopfes 53 in die Gleitlagerbuchse 71 die Gleitlagerbuchse 71 in radialer Richtung aufgeweitet wird, sodass ein Presssitz zwischen Toleranzausgleichselement 7 und Wandöffnung 31a entsteht. Dadurch kann eine in radialer Richtung spielfreie Halterung des Bolzenkopfes 53 innerhalb der Wandöffnung 31a ermöglicht werden.

Der Spalt 29 zwischen erster Wand 31 und erster Hülse 41 liegt dabei sowohl im unverschraubten, als auch im vollständig verschraubten Zustand vor (vgl. Figur 8A und 9).

Bevorzugt weist der Bolzenkopf 53 an einer der Hülse 41 zugewandten Seite eine Einführfase 53a (vergleiche Figur 9) auf, welche das Einschieben und Einschrauben des Durchgangsbolzens 5 erleichtert.

An den beiden axialen Enden weist die Dämpfungshülle 72 jeweils eine Dichtlippe 72a auf, welche als sowohl nach radial innen, als auch nach radial außen vorstehende Lippe ausgebildet ist. Durch die Elastizität der Dämpfungshülle 72 werden hierbei beim Einschrauben des Durchgangsbolzens 5 die Dichtlippen 72a durch den Bolzenkopf 53 nach radial außen gedrängt. Dadurch ergibt sich eine zuverlässige und definierte Abdichtung zwischen erster Wand 31 und Toleranzausgleichselement 7 sowie zwischen Bolzenkopf 53 und Toleranzausgleichselement 7. Ferner bewirken die Dichtlippen 72a einen axialen Formschluss des Toleranzausgleichselements 7 mit der ersten Wand 31. Dadurch wird eine zuverlässige und definierte Anordnung des Toleranzausgleichselements 7 relativ zur ersten Wand 31 sichergestellt.

Das Toleranzausgleichselement 7 kann bevorzugt, wie in der Figur 10 dargestellt, vor dem Anordnen der Antriebseinheit 2 in die Wandöffnung 31a der ersten Wand 31 von außen, also von außerhalb der Rahmenschnittstelle 3, eingesteckt, insbesondere mittels eines geringfügigen Formschlusses durch die Dichtlippen 72a eingeclipst, werden.

Zusätzlich ist die Verschraubung des Durchgangsbolzens 5 im ersten Ausführungsbeispiel an der zweiten Wand 32 mittels einer Mutter 51 ausgebildet. Der Durchgangsbolzen 5 ist dabei in die Mutter 51 an der zweiten Wand 32 eingeschraubt. Die Mutter 51 kann bevorzugt, wie vorzugsweise auch der Durchgangsbolzen 5, aus Stahl gebildet sein, um eine besonders feste Verschraubung mit hohem Drehmoment zu ermöglichen.

Die Mutter 51 ist dabei verdrehsicher in einer Ausnehmung 32b der zweiten Wand 32 angeordnet. Die Ausnehmung 32b ist bevorzugt eine außenliegende radiale Erweiterung einer kreisrunden zweiten Wandöffnung 32c, die die zweite Wand 32 durchdringt. Wie in der Figur 10 zu erkennen, weist die Ausnehmung 32b zwei gegenüberliegende Abflachungen 32d, das heißt zwei in tangentialer Richtung angeordnete, gerade und parallele Wände, auf. Die Mutter 51 weist eine entsprechende Geometrie mit zwei gegenüberliegenden Abflachungen 51a auf. Die Abflachungen 32d, 51a bewirken dabei, dass sich die Mutter 51 in der zweiten Wand 32 nicht verdrehen kann, beispielsweise beim Einschrauben des Durchgangsbolzens 5, wodurch eine besonders einfache und schnelle Montage der Antriebsanordnung 1 ermöglicht wird.

Zudem ist die Mutter 51 in einer Schnittansicht T-förmig ausgebildet. Dadurch kann bei optimaler Kompaktheit des gesamten Antriebsanordnung 1 eine maximale Gewindelänge bereitgestellt werden, um eine feste und zuverlässige Verschraubung mit dem Durchgangsbolzen 5 zu ermöglichen.

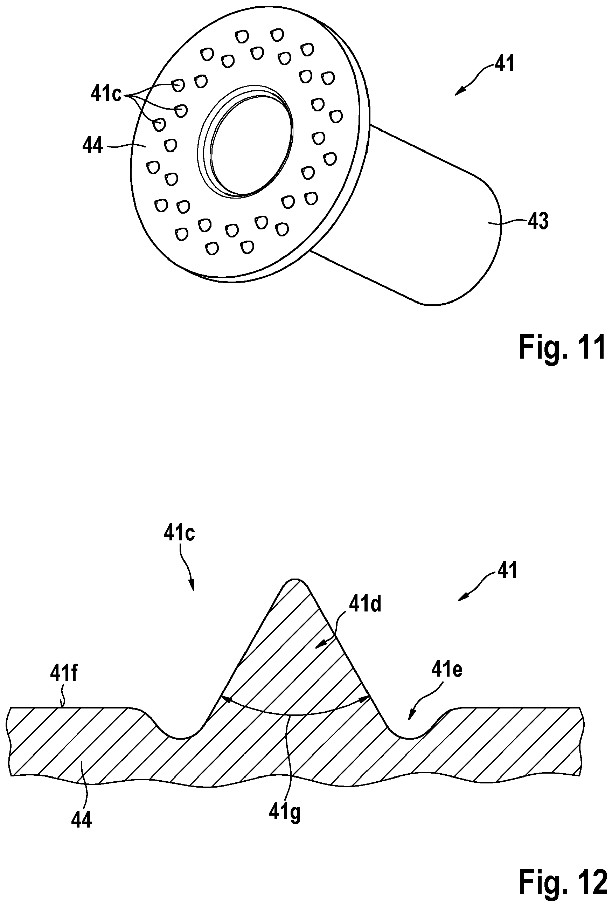

Figur 11 zeigt ein Detail einer Antriebsanordnung 1 gemäß einem sechsten Ausführungsbeispiel der Erfindung. Das sechste Ausführungsbeispiel entspricht im Wesentlichen dem ersten Ausführungsbeispiel der Figuren 1, 2 und 8A bis 10, mit dem Unterschied einer alternativen Hülse 41, 42.

Dargestellt ist in der Figur 11 nur eine der beiden Hülsen 41, 42, wobei die beiden Hülsen 41, 42 bevorzugt identisch ausgebildet sind. Die Hülse 41 ist in perspektivischer Ansicht in der Figur 10 dargestellt.

Die Hülse 41 umfasst einen Schaft 43 und einen Flansch 44. Der Schaft 43 ist in die Durchgangsbohrung 20 der Antriebseinheit 2 eingesteckt. Der Flansch 44 ist vorgesehen zur Anlage an einer Innenseite der zweiten Wand 32 der Rahmenschnittstelle 3 (vgl. z.B. Figur 8A). Der Flansch 44 der Hülse 41 weist an derjenigen Seite, die der Wand 32 zugeordnet ist, eine Vielzahl an vorstehenden Formschlusselementen 41c auf. Bevorzugt sind die Formschlusselemente 41c in einem oder mehreren, wie in der Figur 11 dargestellt bevorzugt zwei, zur Durchgangsöffnung der Hülse 41 konzentrischen Kreisen angeordnet.

Ein einzelnes Formschlusselement 41c der Hülse 41 der Figur 11 ist in einer Detail-Schnittansicht in der Figur 12 dargestellt. Jedes Formschlusselement 41c weist eine von einer Oberfläche 41f des Flansches 44 vorstehende Pyramide 41d auf. Alternativ bevorzugt kann jedes Formschlusselement 41c auch einen vorstehenden Kegel aufweisen. Die Pyramide 41d ist als gerade Pyramide ausgebildet und weist einen Öffnungswinkel 41k von vorzugsweise weniger als 60° auf. Die Pyramiden 41d bewirken dabei, dass sich diese beim Verschrauben der Hülse 41 mit der Wand 32 in die Oberfläche der Wand 32 eindrücken, also die Oberfläche plastisch verformen. Dadurch wird ein Mikro-Formschluss zwischen Hülse 41 und Wand 32 in einer zur Schraubenachse senkrechten Ebene erzeugt, wodurch eine besonders feste Verbindung von Antriebseinheit 2 und Rahmenschnittstelle 3 miteinander ermöglicht werden kann. Ein Rutschen der Antriebseinheit 2 relativ zur Rahmenschnittstelle 3 kann damit zuverlässig verhindert werden.

Jedes Formschlusselement 41c weist dabei zusätzlich zu der Pyramide 41d jeweils eine Vertiefung 41e auf, die an einem Außenumfang der Pyramide 41d und in der Oberfläche 41f des Flansches 44 ausgebildet ist. Die Vertiefung 41e kann beispielsweise durch das Eindringen der Pyramide 41d in die Wand 32 verdrängtes Material der Wand 32 aufnehmen, sodass Wand 32 und Flansch 44 zuverlässig präzise plan aufeinander aufliegen können. Beispielsweise kann pro Pyramide 41d jeweils eine separate Vertiefung 51e vorgesehen sein, die die Pyramide 41d teilweise oder vollständig umgibt. Alternativ bevorzugt kann eine einzelne Vertiefung 41e in der Oberfläche 41f des Flansches 44 ausgebildet sein, an deren radialer Innenseite und/oder Außenseite die Pyramiden 41d angeordnet sind.

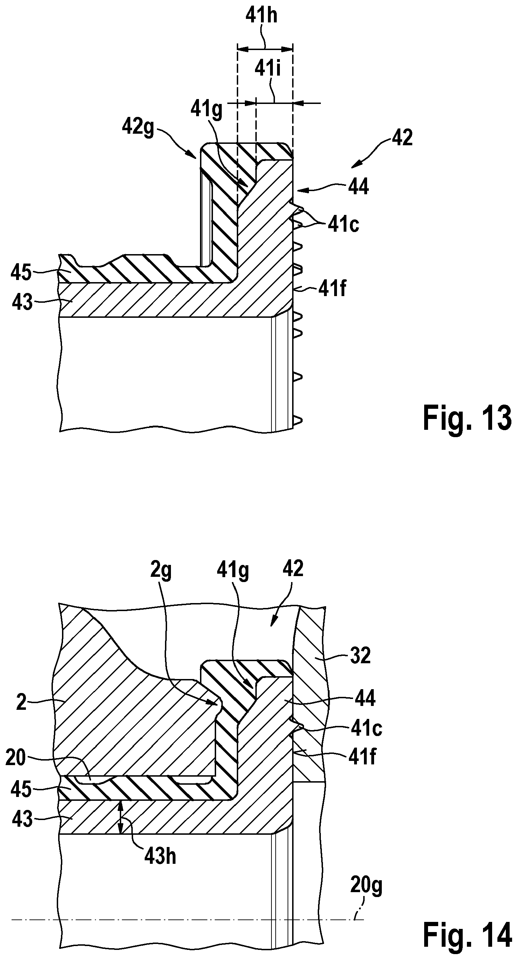

Figur 13 zeigt eine Detail-Schnittansicht einer Antriebsanordnung 1 gemäß einem siebten Ausführungsbeispiel der Erfindung. Dargestellt ist in der Figur 13 dabei nur eine der beiden Hülsen 41, 42 nämlich die Hülse 42 an der Seite der zweiten Wand 32. Bevorzugt ist die erste Hülsen 41 an der ersten Wand 31 identisch ausgebildet. Das siebte Ausführungsbeispiel entspricht im Wesentlichen dem ersten Ausführungsbeispiel der Figuren 1, 2 und 8A bis 10, mit dem Unterschied einer alternativen Ausgestaltung der Hülse 42 im Bereich des Flansches 44. Dabei weist die Hülse 42 an einem radial äußeren Ende des Flansches 44 eine Verjüngung 41g auf der dem Schaft 43 zugewandten Seite des Flansches 44 auf. Die Verjüngung 41g ist dabei derart ausgebildet, dass eine Differenz der maximalen Dicke 41h und einer minimalen Dicke 41i des Flansches 44 mindestens 50 %, bevorzugt maximal 150 %, einer Wandstärke 43h des Schafts 43 der Hülse 42 entspricht. Die Dicken werden dabei entlang einer Richtung parallel zur einer Längsachse der Hülse 42 betrachtet.

Das Dämpfungselement 45 ist dabei derart ausgebildet, dass dieses die Verjüngung 41g des Flansches 44 kompensiert. Zusätzlich weist das Dämpfungselement 45 an einem radial äußersten Ende eine Verdickung 42g auf. Dadurch liegt am radial äußeren Ende des Flansches 44 ein besonders dickes Dämpfungselement 42 vor. Dies wirkt sich vorteilhaft auf eine optimale Abdichtung zwischen Hülse 42 und Antriebseinheit 2 aus.

Weiter unterstützt wird diese Abdichtung durch eine vorstehende Ringrippe 2g der Antriebseinheit 2, welche im siebten Ausführungsbeispiel, wie in der Figur 14 dargestellt, vorgesehen ist. Die vorstehende Ringrippe 2g weist einen trapezförmigen Querschnitt auf und ist konzentrisch zur Durchgangsbohrung 20 der Antriebseinheit 2 angeordnet. Im eingepressten Zustand der Hülse 42 in die Durchgangsbohrung 20 liegen dabei die vorstehende Ringrippe 2g und die Verjüngung 41g der Hülse 42 auf demselben Radius bezüglich der Bohrungsachse 20g der Durchgangsbohrung 20. Dadurch taucht die vorstehende Ringrippe 2g in die weiche Zone des Dämpfungselements 45 im Bereich der Verjüngung 41g ein, wenn Hülse 42 und Antriebseinheit 2 im vollständig verschraubten Zustand gegeneinander gepresst sind. Durch die Elastizität des Dämpfungselements 45 kann somit optimal an der Antriebseinheit 2 abgedichtet werden.

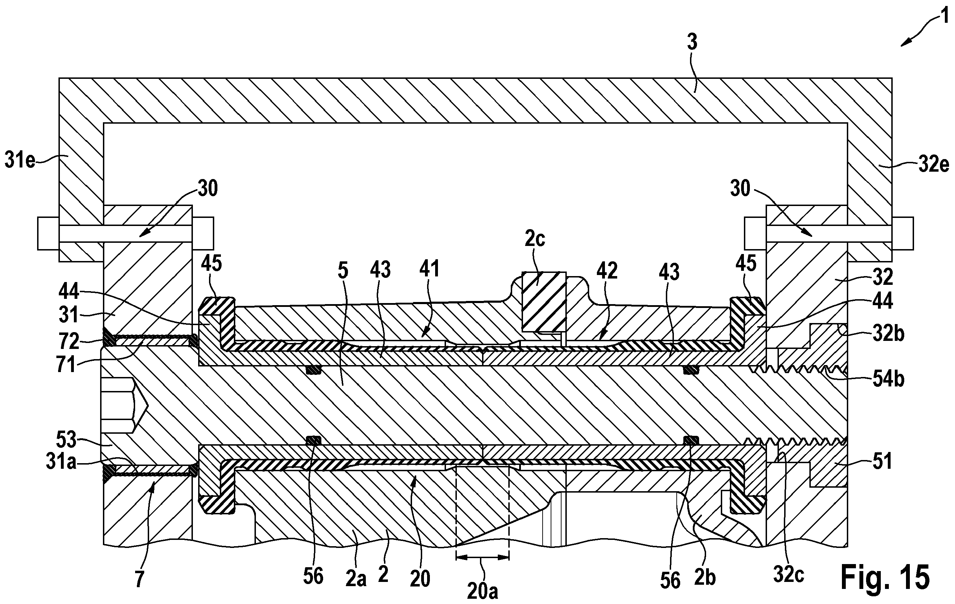

Figur 15 zeigt eine Schnittansicht einer Antriebsanordnung 1 gemäß einem achten Ausführungsbeispiel der Erfindung. Das achte Ausführungsbeispiel entspricht im Wesentlichen dem ersten Ausführungsbeispiel der Figuren 1, 2 und 8A bis 10, mit dem Unterschied, dass die Antriebseinheit 2 indirekt mit der Rahmenschnittstelle 3 verschraubt ist. Im Detail sind hierbei die beiden Wände 31, 32, mit denen die Antriebseinheit 2 verschraubt ist, als separate Bauteile zur Rahmenschnittstelle 3 ausgebildet. Beispielsweise können die Wände 31, 32 als Haltebleche ausgebildet sein. Die Wände 31, 32 können dabei mittels zusätzlicher Schraubenverbindungen 30 und/oder (nicht dargestellter) Schweißverbindungen mit Rahmenwänden 31e, 32e der Rahmenschnittstelle 3 verbunden sein. Dadurch kann eine besonders hohe Flexibilität der Antriebsanordnung 1 bereitgestellt werden.

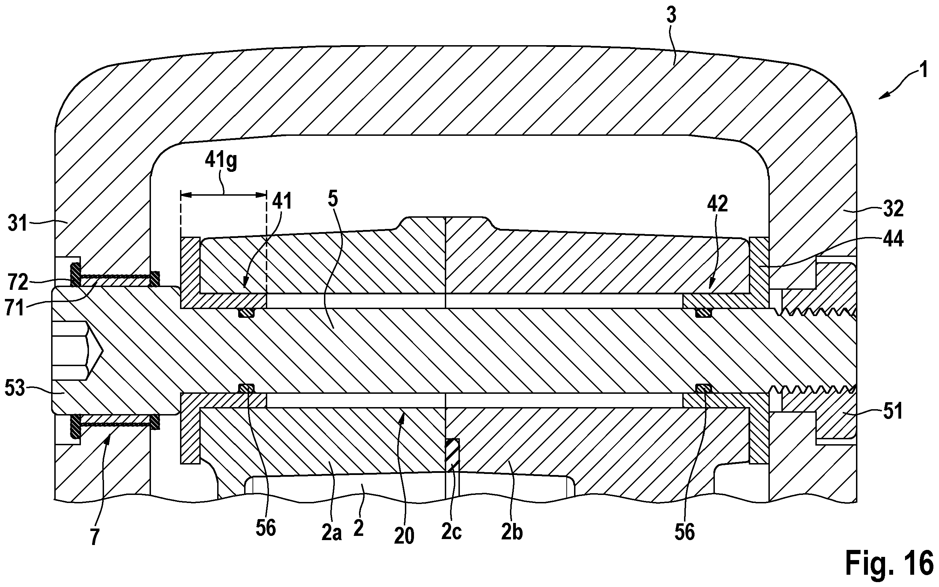

Figur 16 zeigt eine Schnittansicht einer Antriebsanordnung 1 gemäß einem neunten Ausführungsbeispiel der Erfindung. Das neunte Ausführungsbeispiel entspricht im Wesentlichen dem ersten Ausführungsbeispiel der Figuren 1, 2 und 8A bis 10, mit dem Unterschied einer alternativen Ausgestaltung der Hülsen 41, 42. Im neunten Ausführungsbeispiel der Figur 16 sind die beiden Hülsen 41, 42 als besonders einfach und kostengünstig herstellbare verkürzte Metallhülsen ausgebildet. Dabei sind die Hülsen 41, 42 derart ausgebildet, dass diese sich nicht innerhalb der Durchgangsbohrung 20 berühren. Zudem weisen die beiden Hülsen 41, 42 eine kurze axiale Länge 41g auf, welche beispielsweise kleiner ist als ein Innendurchmesser der Durchgangsbohrung 20. Dadurch kann Material eingespart werden und zudem ein einfaches Einpressen der Hülsen 41, 42 in die Durchgangsbohrung 20 ermöglicht werden, da nur eine geringe Presslänge vorliegt. Somit ermöglicht die Antriebsanordnung 1 des neunten Ausführungsbeispiels eine besonders einfache und kostengünstige Konstruktion.

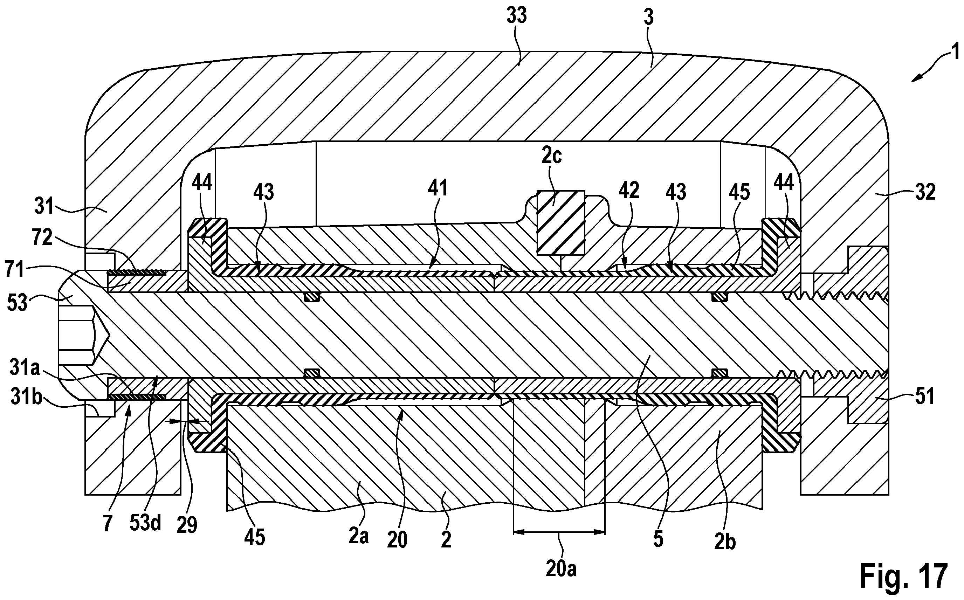

Figur 17 zeigt eine Schnittansicht einer Antriebsanordnung 1 gemäß einem zehnten Ausführungsbeispiel der Erfindung. Das zehnte Ausführungsbeispiel entspricht im Wesentlichen dem ersten Ausführungsbeispiel der Figuren 1, 2 und 8A bis 10, mit dem Unterschied einer alternativen Ausgestaltung der Loslagerung an der ersten Wand 31. Im zehnten Ausführungsbeispiel der Figur 17 sind der Durchgangsbolzen 5 und das Toleranzausgleichselement 7 gemeinsam axial beweglich relativ zur ersten Wand 31 gelagert. Dabei ist im Unterschied zum ersten Ausführungsbeispiel nicht der Bolzenkopf 53, sondern ein Bolzenschaft 53d des Durchgangsbolzens 5 innerhalb des Toleranzausgleichselements 7 angeordnet. Im zehnten Ausführungsbeispiel verspannt der Durchgangsbolzen 5 dabei zusätzlich das Toleranzausgleichselement 7 gegen die erste Hülse 41. Somit können Durchgangsbolzen 5 und Toleranzausgleichselement 7 gemeinsam in der Wandöffnung 31a der ersten Wand 31 gleiten. Die Wandöffnung 31a weist zudem einen vergrößerten Durchmesser 31b an der Außenseite auf, sodass der Bolzenkopf 53 teilweise innerhalb der Wandöffnung 31a angeordnet sein kann. Alternativ bevorzugt kann der Bolzenkopf 53 auch vollständig außerhalb der Wandöffnung 31a angeordnet sein.

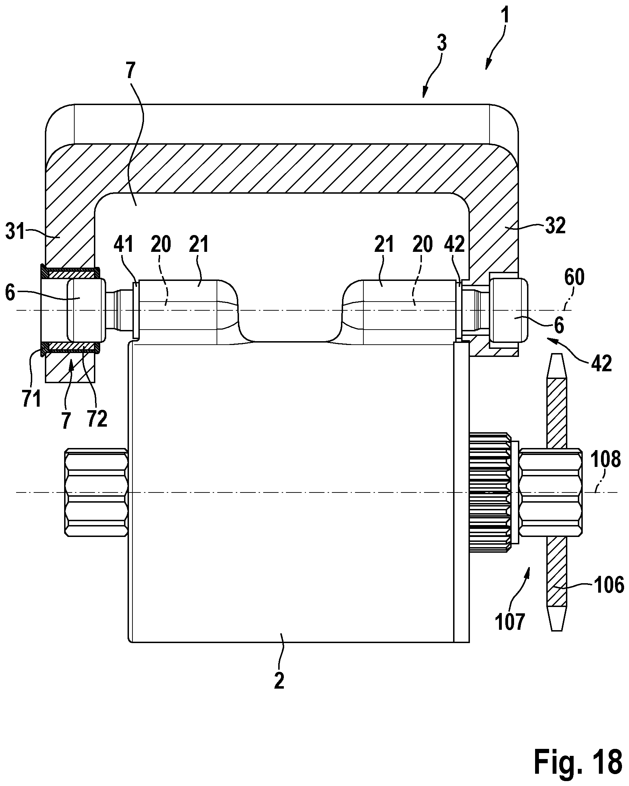

Figur 18 zeigt eine Schnittansicht einer Antriebsanordnung 1 gemäß einem elften Ausführungsbeispiel der Erfindung. Das elfte Ausführungsbeispiel entspricht im Wesentlichen dem ersten Ausführungsbeispiel der Figuren 1, 2 und 8A bis 10, mit dem Unterschied, dass anstatt eines Durchgangsbolzens 5 pro Anbindungsbereich 91, 92 jeweils genau zwei einzelne Schrauben 6 vorgesehen sind. Zudem ist keine Durchgangsbohrung 20 in der Antriebseinheit 2 vorgesehen, sondern separate Öffnungen 20, in die die Hülsen 41, 42 eingesteckt sind. Die Öffnungen 20 sind dabei in von der Antriebseinheit 2 vorstehenden Laschen 21 ausgebildet. Im elften Ausführungsbeispiel sind die Schrauben 6 jeweils in ein (nicht dargestelltes) Innengewinde der jeweiligen Hülse eingeschraubt. Das elfte Ausführungsbeispiel der Figur 18 bietet somit eine alternative Möglichkeit der Verschraubung, welche beispielsweise je nach Platzangebot an dem Fahrzeug vorteilhaft sein kann.

## Patentansprüche

1. Antriebseinheit (2) eines mit Muskelkraft und/oder Motorkraft betreibbaren Fahrzeugs (100), umfassend:
- einen Motor (21) mit einer Motorachse (21a),
- eine Kurbelwelle (22) mit einer Kurbelachse (22a),
- ein Getriebe (23), das den Motor (21) und die Kurbelwelle (22) mechanisch miteinander gekoppelt, und
- ein Gehäuse (28), in dem der Motor (21) und das Getriebe (23) angeordnet sind,
- wobei das Getriebe (23) zumindest ein erstes Getrieberad (24), das um die Motorachse (21a) rotierbar ist, und ein zweites Getrieberad (25), das um die Kurbelachse (22a) rotierbar ist, aufweist,
- wobei das Gehäuse (28) einen ersten Befestigungsbereich (91) und einen zweiten Befestigungsbereich (92) aufweist,
- wobei der erste Befestigungsbereich (91) und der zweite Befestigungsbereich (92) eingerichtet sind zur Befestigung der Antriebseinheit (2) an einer Rahmenschnittstelle (3) des mit Muskelkraft und/oder Motorkraft betreibbaren Fahrzeugs (100),
- wobei in einer Schnittebene durch die Antriebseinheit (2) und orthogonal zur Kurbelachse (22a):
- eine Längsachse (29) definiert ist, welche die Kurbelachse (22a) und die Motorachse (21a) schneidet, und
- eine erste Linie (81) definiert ist, die orthogonal zur Längsachse (29) und tangential an einem Außenumfang (21c) des Motors (21) angeordnet ist, und
- wobei der erste Befestigungsbereich (91) einen ersten Mittelpunkt (91a) aufweist, der auf der ersten Linie (81) oder auf einer von der Kurbelachse (22a) abgewandten Seite der ersten Linie (81) angeordnet ist.

2. Antriebseinheit nach Anspruch 1,
- wobei die Längsachse (29) einen Fahrzeug-zugewandten Bereich (200) und einen Fahrzeug-abgewandten Bereich (300) voneinander trennt, und
- wobei der erste Mittelpunkt (91a) auf der Längsachse (29) oder im Fahrzeug-zugewandten Bereich (200) angeordnet ist.

3. Antriebseinheit nach einem der vorhergehenden Ansprüche,
- wobei der erste Mittelpunkt (91a) innerhalb eines ersten Befestigung-Sektors (95) liegt,
- wobei der erste Befestigungs-Sektor (95) durch zwei Geraden (95a, 95b), welche die Motorachse (21a) schneiden, begrenzt ist,
- wobei ein erster Winkel (95c) zwischen einer ersten Gerade (95a) und der Längsachse (29) mindestens 5°, bevorzugt mindestens 10°, besonders bevorzugt mindestens 20°, beträgt, und
- wobei ein zweiter Winkel (95d) zwischen einer zweiten Gerade (95b) und der Längsachse (29) maximal 70°, bevorzugt maximal 60°, besonders bevorzugt maximal 50°, beträgt.

4. Antriebseinheit nach einem der vorhergehenden Ansprüche, wobei ein erster Abstand (91c) des ersten Mittelpunkts (91a) von der Motorachse (21a) mindestens 130 %, bevorzugt mindestens 140 %, besonders bevorzugt maximal 180 %, eines maximalen Radius (24a) des Motors (21) beträgt.

5. Antriebseinheit nach einem der vorhergehenden Ansprüche, wobei ein zweiter Abstand (91d) des ersten Mittelpunkts (91a) von der Kurbelachse (22a) mindestens 150 %, bevorzugt mindestens 180 %, besonders bevorzugt maximal 250 %, eines Längs-Abstands (29a) von Motorachse (21a) und Kurbelachse (22a) beträgt.

6. Antriebseinheit nach einem der vorhergehenden Ansprüche, wobei ein dritter Abstand (91e) des ersten Mittelpunkts (91a) von einem zweiten Mittelpunkt (92a) des zweiten Befestigungsbereichs (92) mindestens 120 %, bevorzugt mindestens 130 %, besonders bevorzugt maximal 150 %, des zweiten Abstands (91d) des ersten Mittelpunkts (91a) von der Kurbelachse (22a) beträgt.

7. Antriebseinheit nach einem der vorhergehenden Ansprüche, wobei ein vierter Abstand (92c) des zweiten Mittelpunkts (92a) von der Kurbelachse (22a) maximal 180 %, bevorzugt maximal 140 %, eines maximalen Radius (25a) des zweiten Getrieberads (25) beträgt.

8. Antriebseinheit nach einem der vorhergehenden Ansprüche,
- wobei die Längsachse (29) einen Fahrzeug-zugewandten Bereich (200) und einen Fahrzeug-abgewandten Bereich (300) voneinander trennt, und
- wobei der zweite Mittelpunkt (92a) des zweiten Befestigungsbereichs (92) auf der Längsachse (29) oder im Fahrzeug-zugewandten Bereich (200) angeordnet ist.

9. Antriebseinheit nach Anspruch 8,
- wobei in der Schnittebene durch die Antriebseinheit (2) und orthogonal zur Kurbelachse (22a) ferner eine zweite Linie (82) definiert ist, die orthogonal zur Längsachse (29) und tangential an einem Außenumfang des zweiten Getrieberads (25) angeordnet ist, und
- wobei der zweite Mittelpunkt (92a) des zweiten Befestigungsbereichs (92) auf einer der Motorachse (22a) zugewandten Seite der zweiten Linie (82) angeordnet ist.

10. Antriebseinheit nach Anspruch 9,
- wobei in der Schnittebene durch die Antriebseinheit (2) und orthogonal zur Kurbelachse (22a) ferner eine dritte Linie (83) definiert ist, die orthogonal zur Längsachse (29) ist, und die die Kurbelachse (22a) schneidet, und
- wobei der zweite Mittelpunkt (92a) zwischen der zweiten Linie (82) und der dritten Linie (83) angeordnet ist.

11. Antriebseinheit nach einem der Ansprüche 8 bis 10,
- wobei eine dritte Gerade (92f) definiert ist, welche die Kurbelachse (22a) schneidet, und auf der der zweite Mittelpunkt (92a) liegt, und
- wobei ein dritter Winkel (92g) zwischen der dritten Geraden (92f) und der Längsachse (29) mindestens 40°, bevorzugt mindestens 50°, besonders bevorzugt maximal 80°, beträgt.

12. Antriebseinheit nach einem der Ansprüche 1 bis 7,
- wobei die Längsachse (29) einen Fahrzeug-zugewandten Bereich (200) und einen Fahrzeug-abgewandten Bereich (300) voneinander trennt, und
- wobei der zweite Mittelpunkt (92a) im Fahrzeug-abgewandten Bereich (300) angeordnet ist.

13. Antriebseinheit nach Anspruch 12,
- wobei in der Schnittebene durch die Antriebseinheit (2) und orthogonal zur Kurbelachse (22a) ferner eine zweite Linie (82) definiert ist, die orthogonal zur Längsachse (29) und tangential an einem Außenumfang des zweiten Getrieberads (25) angeordnet ist, und
- wobei der zweite Mittelpunkt (92a) des zweiten Befestigungsbereichs (92) auf der zweiten Linie (82) oder auf einer der Motorachse (22a) abgewandten Seite der zweiten Linie (82) angeordnet ist.

14. Antriebseinheit nach Anspruch 12 oder 13,
- wobei eine Befestigungsachse (90) definiert ist, auf welcher der erste Mittelpunkt (91a) liegt, und welche die Kurbelachse (22a) schneidet, und
- wobei der zweite Mittelpunkt (92a) und die Motorachse (21a) auf derselben Seite der Befestigungsachse (90) angeordnet sind.

15. Antriebseinheit nach Anspruch 14, wobei ein vierter Winkel (92h) zwischen der Befestigungsachse (90) und einer Verbindungslinie (92c) von Kurbelachse (22a) und zweitem Mittelpunkt (92a) maximal 30°, bevorzugt mindestens 10°, beträgt.

16. Antriebsanordnung eines mit Muskelkraft und/oder Motorkraft betreibbaren Fahrzeugs (100), umfassend:
- eine Antriebseinheit (2) nach einem der vorhergehenden Ansprüche, und
- eine Rahmenschnittstelle (3),
- wobei die Antriebseinheit (2) zumindest teilweise zwischen einer ersten Wand (31) und einer zweiten Wand (32) der Rahmenschnittstelle (3) angeordnet ist, und
- wobei das Gehäuse (28) der Antriebseinheit (2) mittels jedem der beiden Befestigungsbereiche (91, 92) der Antriebseinheit (2) an jeder der beiden Wände (31, 32) befestigt ist.

17. Antriebsanordnung nach Anspruch 16, wobei die Rahmenschnittstelle (3) einen Gelenkbereich (101) umfasst, welcher eingerichtet ist, zur Aufnahme eines Gelenkpunktes eines Hinterbaus des Fahrzeugs (100),
- wobei der Gelenkbereich (101) im Fahrzeug-zugewandten Bereich (200) angeordnet ist, und
- wobei der Gelenkbereich (101) auf der zweiten Linie (82) oder auf einer der Motorachse (22a) abgewandten Seite der zweiten Linie (82) angeordnet ist

18. Antriebsanordnung nach Anspruch 16 oder 17,
- wobei eine maximale Breite (93, 94) der Rahmenschnittstelle (3) zwischen der ersten Wand (31) und der zweiten Wand (32) an einem ersten Anbindungsbereich (91') größer als an einem zweiten Anbindungsbereich (92') ist.

19. Antriebsanordnung nach einem der Ansprüche 16 bis 18, umfassend jeweils zwei Schrauben (6) pro Befestigungsbereich (91, 92) der Antriebseinheit (2), wobei das Gehäuse (28) der Antriebseinheit (2) mittels der Schrauben (6) mit den beiden Wänden (31, 32) verschraubt ist.

20. Antriebsanordnung nach einem der Ansprüche 16 bis 18,
- wobei die Antriebseinheit (2) pro Befestigungsbereich (91, 92) jeweils eine Durchgangsbohrung (20) aufweist, und
- wobei die Antriebseinheit (2) einen Durchgangsbolzen (5) pro Befestigungsbereich (91, 92) aufweist, der durch die jeweilige Durchgangsbohrung (20) durchgesteckt ist und die Antriebseinheit (2) an jeder der beiden Wände (31, 32) befestigt.

21. Antriebsanordnung nach Anspruch 20, ferner umfassend jeweils zwei Hülsen (41, 42) pro Durchgangsbohrung (20), welche beidseitig in die Durchgangsbohrung (20) eingesteckt sind, und durch welche der jeweilige Durchgangsbolzen (5) durchgesteckt ist.

22. Antriebsanordnung nach Anspruch 21,
- wobei die beiden Hülsen (41, 42) sich innerhalb der Durchgangsbohrung (20) berühren, und
- wobei der Durchgangsbolzen (5) die beiden Hülsen (41, 42) gegeneinander verspannt.

23. Antriebsanordnung nach Anspruch 21 oder 22,
- wobei jede Hülse (41, 42) einen Schaft (43) und einen Flansch (44) aufweist,
- wobei der Schaft (43) zumindest teilweise innerhalb der Durchgangsbohrung (20) angeordnet ist, und
- wobei der Flansch (44) außerhalb der Durchgangsbohrung (20) angeordnet ist.

24. Antriebsanordnung nach Anspruch 23,
- wobei jede Hülse (41, 42) ein Dämpfungselement (45) aufweist, welches an einer der Antriebseinheit (2) zugewandten Seite des Flansches (44) angeordnet ist, und
- wobei das Dämpfungselement (45) aus einem schwingungsdämpfenden Material gebildet ist,
- insbesondere wobei das Dämpfungselement (45) zusätzlich den Schaft (43) zumindest teilweise umgibt.

25. Antriebsanordnung nach Anspruch 24, wobei die beiden Hülsen (41, 42) so ausgelegt sind, dass in vollständig in die Durchgangsbohrung (20) eingeschobenem Zustand und in unverspanntem Zustand zwischen den beiden Hülsen (41, 42) innerhalb der Durchgangsbohrung (20) ein vordefinierter Axialabstand (27) vorliegt.

26. Antriebsanordnung nach Anspruch 25, wobei der vordefinierte Axialabstand (27) so ausgelegt ist, dass im verspannten Zustand der Axialabstand (27) durch die Verspannung der beiden Hülsen (41, 42) mittels des Durchgangsbolzens (5) und durch elastische Verformung des Dämpfungselements (45) kompensiert ist.

27. Antriebsanordnung nach einem der Ansprüche 23 bis 26,
- wobei der Flansch (44) von zumindest einer Hülse (41, 42) an einer der entsprechenden Wand (31, 32) zugewandten Seite eine Vielzahl an vorstehenden Formschlusselementen (41c) aufweist, und
- wobei die Formschlusselemente (41c) so ausgebildet sind, um sich durch die Verschraubung mit der entsprechenden Wand (31, 32) in die Wand (31, 32) einzudrücken.

28. Antriebsanordnung nach Anspruch 27,
- wobei jedes Formschlusselement (41c) eine von einer Oberfläche (41f) des Flansches (44) vorstehende Pyramide (41d) oder einen Kegel aufweist,
- insbesondere wobei jedes Formschlusselement (41c) eine an die Pyramide (41d) oder den Kegel angrenzende Vertiefung (41e) in der Oberfläche (41f) des Flansches (44) aufweist.

29. Antriebsanordnung nach einem der Ansprüche 23 bis 28,
- wobei der Flansch (44) von zumindest einer Hülse (41, 42) an einem radial äußeren Ende und auf der dem Schaft (43) zugewandten Seite eine Verjüngung (41g) aufweist, und
- wobei die Verjüngung (41g) durch das Dämpfungselement (45) kompensiert ist.

30. Antriebsanordnung nach Anspruch 29,
- wobei die Antriebseinheit (2) zumindest eine vorstehende Ringrippe (2g) aufweist, welche konzentrisch zu einer der Öffnungen (20a, 20b) angeordnet ist,
- insbesondere wobei die vorstehende Ringrippe (2g) und die Verjüngung (41g) des Flansches (44) der Hülse (41) auf demselben Radius bezüglich einer Bohrungsachse (20g) der Durchgangsbohrung (20) angeordnet sind.

31. Antriebsanordnung nach einem der Ansprüche 20 bis 30,
- wobei der Durchgangsbolzen (5) an der zweiten Wand (32) befestigt ist,
- wobei der Durchgangsbolzen (5) die beiden Hülsen (41, 42) und die zweite Wand (32) gegeneinander verspannt, und
- wobei der Durchgangsbolzen (5) an der ersten Wand (31) axial beweglich gehalten ist.

32. Antriebsanordnung nach Anspruch 31, ferner umfassend ein Toleranzausgleichselement (7),
- wobei die erste Wand (31) eine erste Wandöffnung (31a) aufweist,
- wobei das Toleranzausgleichselement (7) hülsenförmig ausgebildet und innerhalb der ersten Wandöffnung (31a) angeordnet ist, und
- wobei ein Bolzenkopf (53) des Durchgangsbolzens (5) innerhalb des Toleranzausgleichselements (7) angeordnet ist.

33. Antriebsanordnung nach Anspruch 32, wobei das Toleranzausgleichselement (7) eine Gleitlagerbuchse (71) und eine Dämpfungshülle (72), welche die Gleitlagerbuchse (71) umgibt, aufweist.

34. Antriebsanordnung nach Anspruch 33, wobei Gleitlagerbuchse (71) und Bolzenkopf (53) so ausgelegt sind, dass der Bolzenkopf (53) die Gleitlagerbuchse (71) in radialer Richtung aufweitet, wenn der Bolzenkopf (53) innerhalb des Toleranzausgleichselements (7) angeordnet ist.

35. Antriebsanordnung nach Anspruch 34, wobei die Gleitlagerbuchse (71) geschlitzt ausgebildet ist, insbesondere wobei der Schlitz (77) der Gleitlagerbuchse (71) schräg bezüglich einer Axialrichtung der Gleitlagerbuchse (71) ausgebildet ist.

36. Antriebsanordnung nach einem der Ansprüche 33 bis 35,
- wobei die Dämpfungshülle (72) mindestens eine Dichtlippe (72a) an einer radialen Außenseite aufweist, und
- wobei die mindestens eine Dichtlippe (72a) so ausgebildet ist, dass ein axialer Formschluss zwischen Dämpfungshülle (72) und erster Wand (31) vorliegt, wenn das Toleranzausgleichselement (7) in der ersten Wandöffnung (31a) angeordnet ist.

37. Antriebsanordnung nach einem der Ansprüche 20 bis 36, wobei der Durchgangsbolzen (5) als Schraube ausgebildet ist, und wobei der Durchgangsbolzen in ein Innengewinde (32a) der zweiten Wand (32) eingeschraubt ist.

38. Antriebsanordnung nach einem der Ansprüche 20 bis 36,
- wobei der Durchgangsbolzen (5) als Schraube ausgebildet ist, und
- wobei der Durchgangsbolzen (5) in eine Mutter (51), welche an der zweiten Wand (32) angeordnet ist, eingeschraubt ist,
- insbesondere wobei die Mutter (51) verdrehsicher in einer Ausnehmung (32b) der zweiten Wand (32) angeordnet ist.

39. Antriebsanordnung nach einem der Ansprüche 23 bis 38,
- wobei der Flansch (44) von zumindest einer Hülse (41, 42) eine Dicke (41h) aufweist, die im Wesentlichen einer Wandstärke (43h) des Schafts (43) der Hülse (41, 42) entspricht, oder
- wobei der Flansch (44) von zumindest einer Hülse (41, 42) eine Dicke (41h) aufweist, die mindestens dem 1,5-fachen einer Wandstärke (43h) des Schafts (43) der Hülse (41, 42) entspricht.

40. Fahrzeug, insbesondere mit Muskelkraft und/oder Motorkraft betreibbares Fahrzeug, vorzugsweise Elektrofahrrad, umfassend eine Antriebsanordnung (1) nach einem der Ansprüche 16 bis 39.

41. Fahrzeug nach Anspruch 40, ferner umfassend ein Kettenblatt (106), welches mit einer Abtriebswelle (108) der Antriebseinheit (2) verbunden ist, und wobei die zweite Wand (32) der Antriebsanordnung (1) auf der Seite des Kettenblatts (106) angeordnet ist.
